# EUROPEAN PATENT APPLICATION

(11) **EP 4 319 143 A1**
(43) Date of publication of application: **07.02.2024**
(21) Application number: 22775145.0
(22) Date of filing: 10.03.2022
(51) Int. Cl.: H04N 7/14, H04M 1/724, H04L 67/00, G06F 3/0481

(54) **PROGRAM, METHOD, AND INFORMATION PROCESSING DEVICE**

(30) Priority: 22.03.2021 JP 2021047709
(71) Applicant: Alpha Omega Inc., Osaka-shi, Osaka 550-0014 (JP)
(72) Inventor: KAJI, Shotaro, Osaka-shi, Osaka 550-0014 (JP)
(74) Representative: Hoffmann Eitle
(86) International application number: PCT/JP2022/010510
(87) International publication number: WO 2022/202353

(57) **Abstract**

Provided are a program, method, and information processing device that enable screen sharing between a plurality of devices and also enables screen switching with simple operations. The present disclosure includes: outputting information for enabling an other information processing device to identify, from within a given image, an image that can be displayed on a display section in accordance with a first operation (e.g., a scroll operation) with respect to an input section; receiving information for enabling identification of an image that can be displayed on a display section of the other information processing device in accordance with a first operation with respect to an input section of the other information processing device; and switching, in accordance with a second operation with respect to the input section, an image displayed on the display section to any of a plurality of types of images including a first image that is part of the given image corresponding to the first operation with respect to the input section of the information processing device and a second image identified based on the received information.

## Description

### TECHNICAL FIELD

The present invention relates to a program, a method, and an information processing device.

### BACKGROUND ART

Techniques are conventionally known that allow, between a plurality of terminal devices, a screen of one terminal device to be shared with other terminal devices. One specific example of such techniques is that, in response to a screen sharing operation in one terminal device (hereinafter referred to as a "terminal device A") and an acceptance operation subsequently performed in another terminal device (hereinafter referred to as a "terminal device B"), a screen of the terminal device A is displayed on and shared with the terminal device B (e.g., FIG. 3 in Patent Literature 1).

### Citation List

### Patent Literature

Patent Literature 1: JP 2017-175638 A

### SUMMARY OF INVENTION

### Technical Problem

However, the conventional technique requires complicated operations because, in the case where the screen of the terminal device A is shared with the terminal device B and the user of the terminal device B wants to display, on the screen of the terminal device B currently displaying the screen of the terminal device A, an image displayed on his/her own terminal device before the screen sharing, it would be necessary to perform an operation for cancelling the screen sharing etc., and further, in order to display the screen of the terminal device A again in the terminal device B, it would be necessary to perform a screen sharing operation again. On the other hand, in order to cause a screen of the terminal device B to be shared with and displayed on the terminal device A, it is necessary to perform: an operation for cancelling the screen sharing with the terminal device B from the terminal device A; a screen sharing operation from the terminal device B; and an acceptance operation in the terminal device A. That is to say, a screen sharing operation has to be performed every time sharing of an image is desired. Accordingly, in the case of bidirectional screen sharing between a plurality of terminal devices, required operations are liable to be complicated.

Further, for example, the user who owns the terminal device B cannot switch the displayed image to an image displayed in the terminal device B itself or to an image displayed in the terminal device A at the will and a desired timing of the user. Similarly, the user who owns the terminal device A cannot switch the displayed image to an image displayed in the terminal device A itself or to an image displayed in the terminal device B at the will and a desired timing of the user. This poses a problem in that the convenience cannot be improved.

The present invention has been made in light of the above-described circumstances, and aims to provide a program, method, and information processing device that enables screen sharing between a plurality of devices and also enables screen switching with simple operations.

### Solution to Problem

According to a certain aspect of an embodiment of the present disclosure, provided herein is a program (e.g., a program included in a web page) to be executed in an information processing device (e.g., a user terminal) that includes a processor, a memory, an input section, and a display section,
the program being configured to cause the information processing device to execute the steps of:
outputting information for enabling an other information processing device to identify, from within a given image, an image that can be displayed on the display section in accordance with a first operation (e.g., a scroll operation) with respect to the input section (e.g., Step S14);
receiving information for enabling identification of an image that can be displayed on a display section of the other information processing device in accordance with a first operation with respect to an input section of the other information processing device (e.g., Step S15); and
switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30), wherein
in the switching step, when the display section displays an image different from the second image, the displayed image can be switched to the second image by performing the second operation with respect to the input section of the information processing device at a timing when the second operation is performed, regardless of the presence or absence of an operation with respect to the input section of the other information processing device.

With this configuration, the image displayed in accordance with the first operation in each of the information processing device and the other information processing device can be shared between them, and also, switching between the image displayed in the information processing device and the image displayed in the other information processing device can be achieved in accordance with the second operation with respect to the information processing device (performed at the will of the user). As a result, the user who owns the information processing device can recognize the image displayed in the other information processing device at a timing desired by the user, and thus can have smooth communication with the user who owns the other information processing device.

According to a certain aspect of an embodiment of the present disclosure, provided herein is a program (e.g., a program included in a web page) to be executed in an information processing device (e.g., a user terminal) that includes a processor, a memory, an input section, and a display section,
the program being configured to cause the information processing device to execute the steps of:
outputting information for enabling an other information processing device to identify, from within a given image, an image that can be displayed on the display section in accordance with a first operation (e.g., a scroll operation) with respect to the input section (e.g., Step S14);
receiving information for enabling identification of an image that can be displayed on a display section of the other information processing device in accordance with a first operation with respect to an input section of the other information processing device (e.g., Step S15); and
switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30), wherein
also in the other information processing device, an image displayed can be switched, in accordance with a second operation with respect to the input section of the other information processing device, to any of a plurality of types of images including an image corresponding to the first operation with respect to the input section of the other information processing device and a second image identified based on the information outputted in the output step, and
in the switching step, regardless of which of the images is displayed on the display section of the other information processing device, the displayed image can be switched, in accordance with the second operation with respect to the input section, to any of the plurality of types of images including the first image and the second image.

With this configuration, the image displayed in accordance with the first operation in each of the information processing device and the other information processing device can be shared between them, and also, switching between the image displayed in the information processing device and the image displayed in the other information processing device can be achieved in accordance with the second operation performed in the information processing device (at the will of the user). As a result, the user who owns the information processing device can recognize the image displayed in the other information processing device at a timing desired by the user, and thus can have smooth communication with the user who owns the other information processing device.

According to a certain aspect of an embodiment of the present disclosure, provided herein is a program (e.g., a program included in a web page) to be executed in an information processing device (e.g., a user terminal) that includes a processor, a memory, an input section, and a display section,
the program being configured to cause the information processing device to execute the steps of:
outputting information for enabling an other information processing device to identify, from within a given image, an image that can be displayed on the display section in accordance with a first operation (e.g., a scroll operation) with respect to the input section (e.g., Step S14);
receiving information for enabling identification of an image that can be displayed on a display section of the other information processing device in accordance with a first operation with respect to an input section of the other information processing device (e.g., Step S15); and
switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30), wherein
in the output step, the information for enabling the other information processing device to identify the image that can be displayed on the display section of the information processing device in accordance with the first operation with respect to the input section is outputted, regardless of which of the plurality of types of images is displayed on the display section of the information processing device, and
in the receiving step, the information for enabling identification of the image that can be displayed on the display section of the other information processing device is received, regardless of which of the plurality of types of images is displayed on the display section of the information processing device.

With this configuration, the image displayed in accordance with the first operation in each of the information processing device and the other information processing device can be shared between them, and also, switching between the image displayed in the information processing device and the image displayed in the other information processing device can be achieved in accordance with the second operation performed in the information processing device (at the will of the user). As a result, the user who owns the information processing device can recognize the image displayed in the other information processing device at a timing desired by the user, and thus can have smooth communication with the user who owns the other information processing device.

The plurality of types of images include a predetermined third image that is different from both the first image and the second image, and
the program causes the information processing device to execute the step of displaying a predetermined icon image for receiving an operation to permit the first image to be displayed in the other information processing device when the displayed image is switched to the third image, whereas the predetermined icon image is not displayed when the displayed image is switched to the first image and the second image.

This configuration can prevent a video of the user himself/herself from being displayed in the other information processing device according to, for example, the circumstances or preference of the user, while reducing the processing load. Also, whether or not to display the first image in the other information processing device can be selected according to the circumstances, preference, or the like of the user. In addition, since the icon image used for selection is not displayed when the displayed image is switched to the first image or the second image, it is also possible to prevent the icon image from degrading the visibility of the first image and the second image.

The plurality of types of images include a predetermined third image that is different from both the first image and the second image, and
in the switching step, switching from the first image to the second image and switching from the second image to the first image are regulated, whereas switching between the first image and the third image and switching between the second image and the third image are allowed.

This configuration can prevent a video of the user himself/herself from being displayed in the other information processing device according to, for example, the circumstances or preference of the user, while reducing the processing load. In addition, since direct switching from the first image to the second image without via the third image and direct switching from the second image to the first image without via the third image do not take place, it is possible to reduce the risk that the first image may be misrecognized as the second image and the second image may be misrecognized as the first image.

The program causes the information processing device to execute the step of displaying a plurality of types of corresponding images that correspond to the plurality of types of images, regardless of the type of the image displayed by switching in the switching step, with the corresponding image that corresponds to the image displayed by switching in the switching step being displayed in a different manner (e.g., highlighted) from those for the other corresponding images.

With this configuration, the user can be notified of the type of the currently displayed image in an easy-to-understand manner based on the mode of the corresponding image, and this can prevent misrecognition from occurring.

The information outputted in the output step and the information received in the receiving step are each region information for identifying a region of the given image corresponding to the first operation with respect to the input section.

This configuration can reduce the data volume of the information to be outputted or received and also can reduce the processing load for identifying images.

The input section is a touch panel,
the first operation includes an operation with respect to the touch panel, and
the information outputted in the output step and the information received in the receiving step are each operation mode information for enabling identification of a mode of the operation with respect to the touch panel.

This configuration can reduce the data volume of the information to be outputted or received and also can reduce the processing load for identifying images.

The information outputted in the output step and the information received in the receiving step are each image information for enabling display of an image of a region of the given image corresponding to the first operation with respect to the input section.

This configuration can reduce the processing load for identifying images.

The program is configured to cause the information processing device to execute the steps of:
displaying, on the display section of the information processing device, a composite image including at least the image that is part of the given image corresponding to the operation with respect to the input section of the information processing device and the image identified based on the information received in the receiving step; and
setting a control pattern of the information processing device from a plurality of types of control patterns, wherein
the plurality of types of control patterns include a first control pattern that causes the information processing device to execute the identification step, the receiving step, and the switching step and a second control pattern that causes the information processing device to execute the identification step, the receiving step, and the composite image displaying step.

With this configuration, since the control pattern selected from the plurality of types of control patterns is set, the convenience can be improved.

In the control pattern setting step, according to a display size of the display section of the information processing device, the first control pattern is set when the display size is smaller than a predetermined size and the second control pattern is set when the display size is equal to or larger than the predetermined size.

With this configuration, the control pattern can be automatically customized according to the display size of a display section of an information processing device to be used.

In the control pattern setting step, any of the plurality of types of control patterns is set in accordance with a third operation with respect to the input section.

This configuration enables customization of a control pattern at the will of the user.

The given image that serves as a display target image to be displayed on the display section of the information processing device may be different from a given image that serves as a display target image to be displayed on the display section of the other information processing device.

This configuration increases the variations of images that can be shared and thus can improve the convenience.

The input section is a touch panel,
the second operation is a moving gesture along a predetermined direction on the touch panel, and
in the switching step, in a state where the first image is displayed on the display section of the information processing device, switching to another image included in the plurality of types of images is not achieved by a moving gesture toward a specific direction along the predetermined direction and can be achieved by a moving gesture toward a direction that is different from the specific direction along the predetermined direction.

This configuration makes it easier to understand the position at which the first image is arranged and can prevent the switching operation for switching to the first image from being difficult to understand.

According to a certain aspect of an embodiment of the present disclosure, provided herein is a method to be executed in an information processing device that includes a processor, a memory, an input section, and a display section, the method including the steps of:
outputting information for enabling an other information processing device to identify, from within a given image, an image that can be displayed on the display section in accordance with a first operation (e.g., a scroll operation) with respect to the input section (e.g., Step S14);
receiving information for enabling identification of an image that can be displayed on a display section of the other information processing device in accordance with a first operation with respect to an input section of the other information processing device (e.g., Step S15); and
switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30), wherein
in the switching step, when the display section displays an image different from the second image, the displayed image can be switched to the second image by performing the second operation with respect to the input section of the information processing device at a timing when the second operation is performed, regardless of the presence or absence of an operation with respect to the input section of the other information processing device.

With this configuration, the image displayed in accordance with the first operation in each of the information processing device and the other information processing device can be shared between them, and also, switching between the image displayed in the information processing device and the image displayed in the other information processing device can be achieved in accordance with the second operation performed in the information processing device (at the will of the user). As a result, the user who owns the information processing device can recognize the image displayed in the other information processing device at a timing desired by the user, and thus can have smooth communication with the user who owns the other information processing device.

According to a certain aspect of an embodiment of the present disclosure, provided herein is a method to be executed in an information processing device that includes a processor, a memory, an input section, and a display section, the method including the steps of:
outputting information for enabling an other information processing device to identify, from within a given image, an image that can be displayed on the display section in accordance with a first operation (e.g., a scroll operation) with respect to the input section (e.g., Step S14);
receiving information for enabling identification of an image that can be displayed on a display section of the other information processing device in accordance with a first operation with respect to an input section of the other information processing device (e.g., Step S15); and
switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30), wherein
also in the other information processing device, an image displayed can be switched, in accordance with a second operation with respect to the input section of the other information processing device, to any of a plurality of types of images including an image corresponding to the first operation with respect to the input section of the other information processing device and a second image identified based on the information outputted in the output step, and
in the switching step, regardless of which of the images is displayed on the display section of the other information processing device, the displayed image can be switched, in accordance with the second operation with respect to the input section, to any of the plurality of types of images including the first image and the second image.

With this configuration, the image displayed in accordance with the first operation in each of the information processing device and the other information processing device can be shared between them, and also, switching between the image displayed in the information processing device and the image displayed in the other information processing device can be achieved in accordance with the second operation performed in the information processing device (at the will of the user). As a result, the user who owns the information processing device can recognize the image displayed in the other information processing device at a timing desired by the user, and thus can have smooth communication with the user who owns the other information processing device.

According to a certain aspect of an embodiment of the present disclosure, provided herein is a method to be executed in an information processing device that includes a processor, a memory, an input section, and a display section, the method including the steps of:
outputting information for enabling an other information processing device to identify, from within a given image, an image that can be displayed on the display section in accordance with a first operation (e.g., a scroll operation) with respect to the input section (e.g., Step S14);
receiving information for enabling identification of an image that can be displayed on a display section of the other information processing device in accordance with a first operation with respect to an input section of the other information processing device (e.g., Step S15); and
switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30), wherein
in the output step, the information for enabling the other information processing device to identify the image that can be displayed on the display section of the information processing device in accordance with the first operation with respect to the input section is outputted, regardless of which of the plurality of types of images is displayed on the display section of the information processing device, and
in the receiving step, the information for enabling identification of the image that can be displayed on the display section of the other information processing device is received, regardless of which of the plurality of types of images is displayed on the display section of the information processing device.

With this configuration, the image displayed in accordance with the first operation in each of the information processing device and the other information processing device can be shared between them, and also, switching between the image displayed in the information processing device and the image displayed in the other information processing device can be achieved in accordance with the second operation performed in the information processing device (at the will of the user). As a result, the user who owns the information processing device can recognize the image displayed in the other information processing device at a timing desired by the user, and thus can have smooth communication with the user who owns the other information processing device.

According to a certain aspect of an embodiment of the present disclosure, provided herein is an information processing device including:
a processor;
a memory;
an input section; and
a display section, wherein
the information processing device includes the steps of:
   outputting information for enabling an other information processing device to identify, from within a given image, an image that can be displayed on the display section in accordance with a first operation (e.g., a scroll operation) with respect to the input section (e.g., Step S14);
   receiving information for enabling identification of an image that can be displayed on a display section of the other information processing device in accordance with a first operation with respect to an input section of the other information processing device (e.g., Step S15); and
   switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30), and
   in the switching step, when the display section displays an image different from the second image, the displayed image can be switched to the second image by performing the second operation with respect to the input section of the information processing device at a timing when the second operation is performed, regardless of the presence or absence of an operation with respect to the input section of the other information processing device.

With this configuration, the image displayed in accordance with the first operation in each of the information processing device and the other information processing device can be shared between them, and also, switching between the image displayed in the information processing device and the image displayed in the other information processing device can be achieved in accordance with the second operation performed in the information processing device (at the will of the user). As a result, the user who owns the information processing device can recognize the image displayed in the other information processing device at a timing desired by the user, and thus can have smooth communication with the user who owns the other information processing device.

According to a certain aspect of an embodiment of the present disclosure, provided herein is an information processing device including:
a processor;
a memory;
an input section; and
a display section, wherein
the information processing device includes the steps of:
   outputting information for enabling an other information processing device to identify, from within a given image, an image that can be displayed on the display section in accordance with a first operation (e.g., a scroll operation) with respect to the input section (e.g., Step S14);
   receiving information for enabling identification of an image that can be displayed on a display section of the other information processing device in accordance with a first operation with respect to an input section of the other information processing device (e.g., Step S15); and
   switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30),
   also in the other information processing device, an image displayed can be switched, in accordance with a second operation with respect to the input section of the other information processing device, to any of a plurality of types of images including an image corresponding to the first operation with respect to the input section of the other information processing device and a second image identified based on the information outputted in the output step, and
   in the switching step, regardless of which of the images is displayed on the display section of the other information processing device, the displayed image can be switched, in accordance with the second operation with respect to the input section, to any of the plurality of types of images including the first image and the second image.

With this configuration, the image displayed in accordance with the first operation in each of the information processing device and the other information processing device can be shared between them, and also, switching between the image displayed in the information processing device and the image displayed in the other information processing device can be achieved in accordance with the second operation performed in the information processing device (at the will of the user). As a result, the user who owns the information processing device can recognize the image displayed in the other information processing device at a timing desired by the user, and thus can have smooth communication with the user who owns the other information processing device.

According to a certain aspect of an embodiment of the present disclosure, provided herein is an information processing device including:
a processor;
a memory;
an input section; and
a display section, wherein
the information processing device includes the steps of:
   outputting information for enabling an other information processing device to identify, from within a given image, an image that can be displayed on the display section in accordance with a first operation (e.g., a scroll operation) with respect to the input section (e.g., Step S14);
   receiving information for enabling identification of an image that can be displayed on a display section of the other information processing device in accordance with a first operation with respect to an input section of the other information processing device (e.g., Step S15); and
   switching, in accordance with a second operation (e.g., a switching operation) with respect to the input section, an image displayed on the display section to any of a plurality of types of images including a first image that is part of the given image corresponding to the first operation with respect to the input section of the information processing device and a second image identified based on the information received in the receiving step (e.g., Steps S24 to S30),
   in the output step, the information for enabling the other information processing device to identify the image that can be displayed on the display section of the information processing device in accordance with the first operation with respect to the input section is outputted, regardless of which of the plurality of types of images is displayed on the display section of the information processing device, and
   in the receiving step, the information for enabling identification of the image that can be displayed on the display section of the other information processing device is received, regardless of which of the plurality of types of images is displayed on the display section of the information processing device.

With this configuration, the image displayed in accordance with the first operation in each of the information processing device and the other information processing device can be shared between them, and also, switching between the image displayed in the information processing device and the image displayed in the other information processing device can be achieved in accordance with the second operation performed in the information processing device (at the will of the user). As a result, the user who owns the information processing device can recognize the image displayed in the other information processing device at a timing desired by the user, and thus can have smooth communication with the user who owns the other information processing device.

The information processing device executes the step of displaying a predetermined icon image for receiving an operation to permit the first image to be displayed in the other information processing device when the displayed image is switched to the third image, whereas the predetermined icon image is not displayed when the displayed image is switched to the first image and the second image.

Since the icon image used for selection is not displayed when the displayed image is switched to the first image or the second image, it is possible to prevent the icon image from degrading the visibility of the first image and the second image.

In the switching step, switching from the first image to the second image and switching from the second image to the first image are regulated, whereas switching between the first image and the third image and switching between the second image and the third image are allowed.

With this configuration, since direct switching from the first image to the second image without via the third image and direct switching from the second image to the first image without via the third image do not take place, it is possible to reduce the risk that the first image may be misrecognized as the second image and the second image may be misrecognized as the first image.

The information processing device executes the step of displaying a plurality of types of corresponding images that correspond to the plurality of types of images, regardless of the type of the image displayed by switching in the switching step, with the corresponding image that corresponds to the image displayed by switching in the switching step being displayed in a different manner (e.g., highlighted) from those for the other corresponding images.

With this configuration, the user can be notified of the type of the currently displayed image in an easy-to-understand manner based on the mode of the corresponding image, and this can prevent misrecognition from occurring.

The plurality of types of corresponding images are displayed in the state of being arranged along a predetermined direction (e.g., the horizontal direction),
the input section is a touch panel, and
the second operation is a moving gesture along the same direction as the predetermined direction on the touch panel (e.g., a swipe operation along the left-right direction).

With this configuration, the arrangement of the corresponding images can make the second operation more intuitive.

### BRIEF DESCRIPTION OF DRAWINGS

[FIG. 1] FIG. 1 shows an example of the hardware configuration of a communication system.
[FIG. 2] FIG. 2 shows an example of the hardware configuration of a user terminal.
[FIG. 3] FIG. 3 illustrates a flow of processes executed before the start of WebRTC (including P2P communication, for example) between a plurality of user terminals.
[FIG. 4] FIG. 4 shows examples of a display screen on a touch screen of a user terminal X.
[FIG. 5] FIG. 5 shows examples of a display screen on the touch screen of the user terminal X during P2P communication and examples of a display screen on a touch screen of a user terminal Y, which is a communication partner terminal, when it is in the own terminal mode.
[FIG. 6] FIG. 6 shows examples of a display screen on the touch screen of the user terminal X during P2P communication and examples of a display screen on the touch screen of the communication partner terminal, the user terminal Y, when it is in the own terminal mode.
[FIG. 7] FIG. 7 is a flowchart illustrating a drawing process.
[FIG. 8] FIG. 8 is a flowchart illustrating an image identification process.
[FIG. 9] FIG. 9 is a flowchart illustrating a display process.
[FIG. 10] FIG. 10 is a flowchart illustrating a drawing process in a second embodiment.
[FIG. 11] FIG. 11 is a flowchart illustrating an image identification process in the second embodiment.
[FIG. 12] FIG. 12 is a flowchart illustrating a display process in the second embodiment.
[FIG. 13] FIG. 13 shows examples of a display screen on a touch screen of a user terminal X during P2P communication and examples of a display screen on the touch screen of a user terminal Y, which is a communication partner terminal, when it is in the own terminal mode in the second embodiment.

### DESCRIPTION OF EMBODIMENTS

A communication system according to the present disclosure is a system that enables screen sharing between a plurality of information processing devices owned by a plurality of users and also screen switching with simple operations. Hereinafter, embodiments of the communication system will be described with reference to the drawings. The present invention is by no means limited to the following illustrative embodiments and shall be construed on the basis of the appended claims, and all changes that come within the meaning and range of equivalency of the claims are intended to be embraced in the present invention. In the following, the same components are given the same reference numerals in the descriptions of the drawings, and redundant explanations thereof will be omitted.

### First Embodiment

### <Hardware Configuration of Communication System>

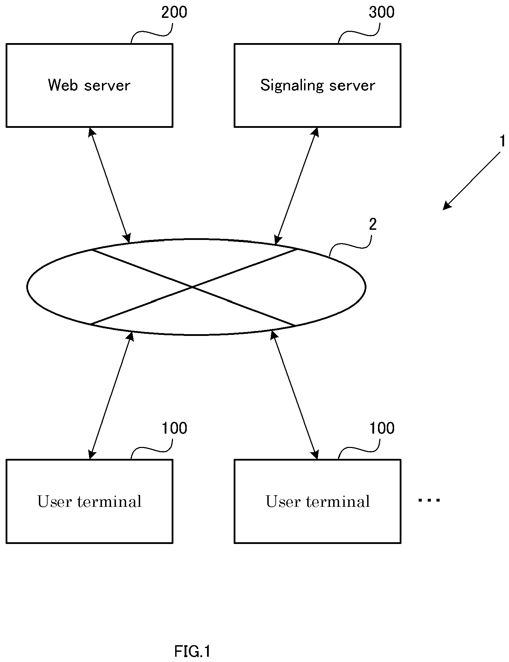

FIG. 1 shows an example of the hardware configuration of a communication system 1. The communication system 1 includes a plurality of user terminals 100, a web server 200, and a signaling server 300. The user terminals 100, the web server 200, and the signaling server 300 can be communicatively coupled to each other via a network 2, and information (data) can be bidirectionally transmitted and received between them. The network 2 is constituted by the Internet and any of various types of mobile communication systems provided by wireless base stations (not shown). Examples of the mobile communication systems include so-called 4G and 5G mobile communication systems, LTE (Long Term Evolution), and wireless networks that enable a connection to the Internet via a specified access point (e.g., Wi-Fi^{®}).

The user terminal 100 (a computer or an information processing device) may be, for example, a mobile terminal such as a smartphone, a feature phone, a PDA (Personal Digital Assistant), or a tablet computer or may be a general-purpose computer such as a stationary personal computer. A web browser for viewing web pages is provided (installed) in the user terminal 100.

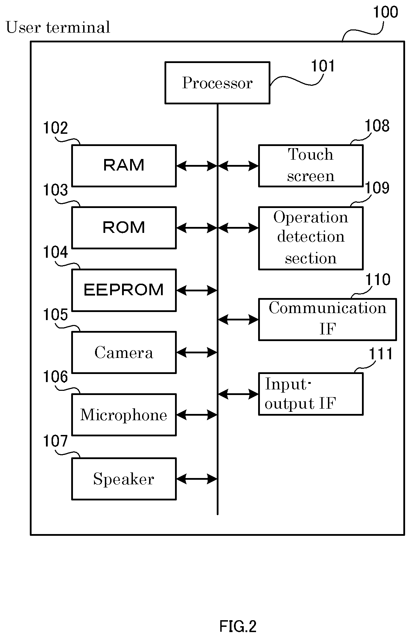

FIG. 2 shows an example of the hardware configuration of the user terminal 100. As shown in FIG. 2, the user terminal 100 includes: a processor 101 that constitutes a control processing unit; a RAM 102, ROM 103, and EEPROM 104 that constitute a memory section; a camera 105 that converts images captured by an image pickup device (e.g., a CMOS (Complementary Metal-Oxide Semiconductor) sensor) into digital signals; a microphone 106 that converts mechanical vibrations of a diaphragm caused by sound waves into electrical signals; a speaker 107 that outputs audio; a touch screen 108 that includes a display section for displaying images and detects touch operations to the display section; an operation detection section 109 that detects pressing operations and the like by a user to predetermined buttons (operation units), a communication IF 110, and an input-output IF 111. These components of the user terminal 100 are electrically connected to each other via communication buses. The communication IF 110 includes an NIC (Network Interface Controller) and a wireless LAN (Local Area Network) chip. The user terminal 100 may include, instead of or in addition to the touch screen 108, an input-output IF to which a display (display section) provided separately from the main body of the user terminal 100 can be connected.

The processor 101 includes a CPU (Central Processing Unit), an MPU (Micro Processing Unit), and a GPU (Graphics Processing Unit). The processor 101 is configured, for example, to read programs stored in the EEPROM 104 into the RAM 102, to receive data from the touch screen 108, the operation detection section 109, the communication IF 110, or the like according to instructions of a program, to compute and process the acquired data according to procedures specified in the program, and then to output the computed and processed date to the EEPROM 104, the touch screen 108, the communication IF 110, or the like.

Referring back to FIG. 1, the web server 200 may be a workstation, and the signaling server 300 (a computer or an information processing device) may be a general-purpose computer such as a personal computer. The web server 200 and the signaling server 300 each at least include a processor, a memory, a storage, a communication IF, and an input-output IF, and they are electrically connected to each other via communication buses.

The web server 200 is a server that serves predetermined web pages. A web page to be served may be a web page composed of a single hierarchical level or a web page composed of a plurality of hierarchical levels, on which clicking a given link within the page allows an access to the linked page. Web pages served by the web server 200 include, for example, programs (e.g., a script and JavaScript^{®}) for providing WebRTC (web Real-time Communications) services. The user can use communication services such as video calling and screen sharing utilizing the WebRTC technology, based on the programs included in a web page by accessing the web server 200 using a web browser provided in the user terminal 100.

The signaling server 300 is a server that mediates information exchange to establish RTC peer connection between web browsers provided in the respective user terminals 100. By accessing the web server 200 using the web browser, the user terminal 100 can receive an HTML file that constitutes a web page, whereby it becomes possible to display the web page, and also can download program files for video communication, screen sharing, etc. utilizing WebRTC technology, whereby video calling, screen sharing, etc. in real time with the other user terminal 100 becomes possible.

Based on the downloaded programs, the user terminal 100 in the present embodiment can perform video calling by transmitting and receiving, for example, images captured by the camera 105 and audio inputted to the microphone 106 in real time, for example, between a plurality of user terminals 100 for which the RTC peer connection has been established via the signaling server 300 to enable peer-to-peer (P2P) communication. Furthermore, based on the downloaded programs, the user terminal 100 in the present embodiment can transmit and receive information to enable, for example, an image of the web page currently viewed in the user terminal 100 to be displayed in the other user terminal 100, and also can perform screen sharing in which, in accordance with a switching operation (e.g., a swipe operation along the left-right direction) by the user who owns the user terminal 100, the image displayed on the touch screen is switched to any of a plurality of types of images (e.g., an image displayed in the user's own terminal (hereinafter also referred to as "own terminal image"), an image displayed in the communication partner terminal (hereinafter also referred to as "communication partner terminal image"), and an image displayed during an ongoing video call (hereinafter also referred to as "video call image"), etc.). In the following, a flow of processes from establishment of P2P communication to the start of video calling and screen sharing will be described.

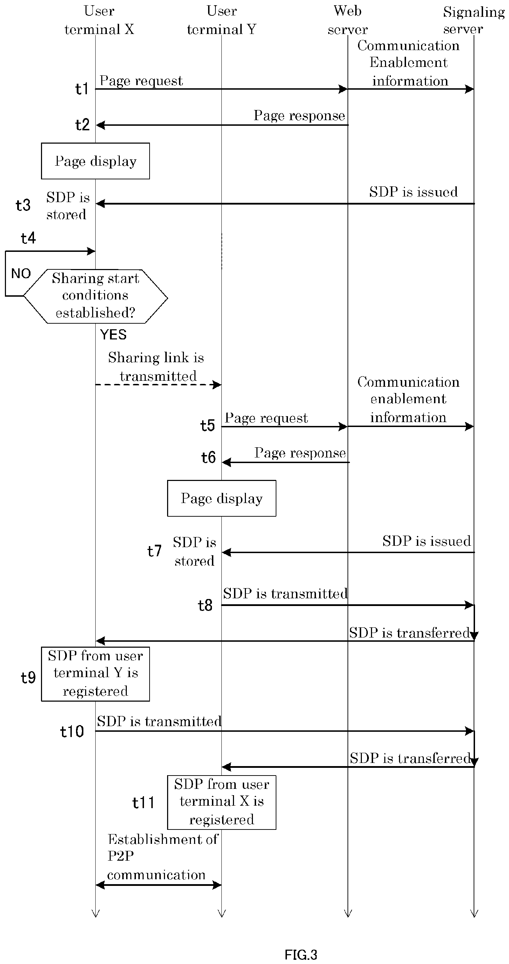

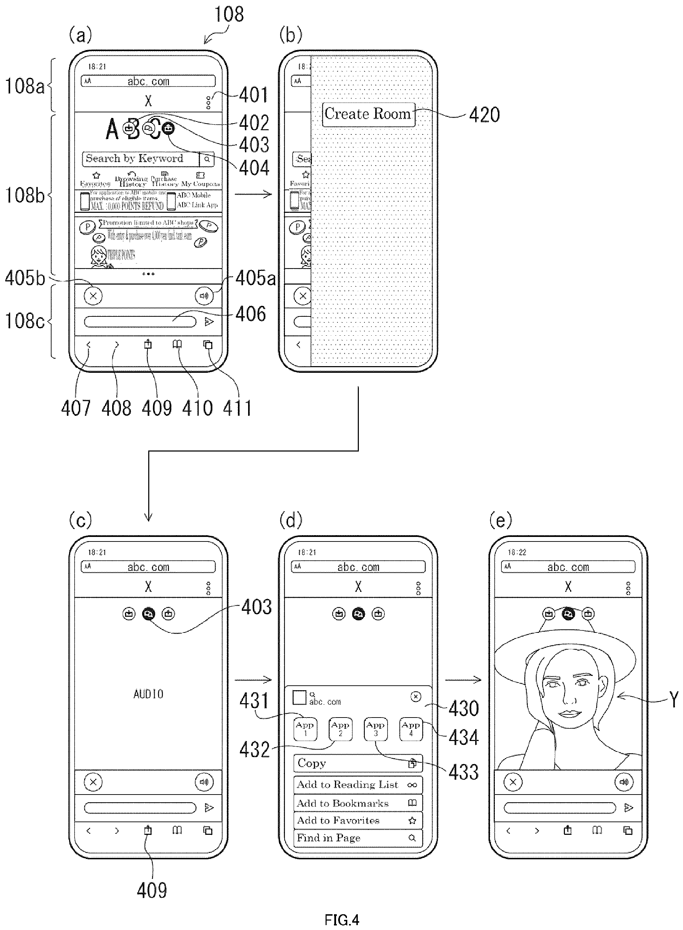

FIG. 3 illustrates a flow of processes executed before the start of WebRTC (including P2P communication, for example) between a plurality of user terminals. FIG. 3 shows a flow of processes executed until P2P communication is established between a plurality of user terminals, namely, between a user terminal X owned by a user X and a user terminal Y owned by a user Y In FIG. 3, the horizontal axis indicates the components such as the user terminal X, the user terminal Y, the web server 200, and the signaling server 300, and the vertical axis indicates the time course of the processes executed in each of the components. It should be noted that FIG. 3 merely illustrates an exemplary flow of processes executed before the start of WebRTC (including P2P communication, for example) between a plurality of user terminals, and the flow of processes is not limited to the one described below as long as it enables communication between the plurality of user terminals. FIG. 4 shows examples of a display screen on the touch screen 108 of the user terminal X.

First, at t1, a web browser is launched and a web page request is transmitted to the web server 200 in the user terminal X. The web page request includes communication enablement information for enabling P2P communication of the user terminal X with other user terminals (e.g., information that enables identification of the media type (audio or video), the codec format, the IP address and the port number, the protocol used for data transfer (TCP, UDP, or the like), information such as an encryption key (information for establishing RTC peer connection), and the like). Upon receipt of the web page request, the web server 200 transmits the communication enablement information to the signaling server 300.

At t2, a web page response is transmitted from the web server 200 to the user terminal X. The web page response includes information for displaying a given image (such as an HTML file and image data). As a result, the web page served by the web server 200 is displayed on the touch screen 108 of the user terminal X. The web page response also includes program files (such as a script and JavaScript^{®}). Thus, the user terminal 100 that has accessed the web server 200 can establish P2P communication to enable video calling and screen sharing by executing the programs included in the web page. The program files included in the web page response and stored in the RAM 102 are discarded when the access to the web server 200 is terminated. However, the present disclosure is not limited thereto, and instead of discarding the program files, the program files may be maintained so as to be available for subsequent accesses, depending on the user settings or the like.

In FIG. 4, (a) shows an example of the display screen on the touch screen 108 when the web page is displayed thereon after accessing the web server 200. An upper screen region 108a of the touch screen 108 displays the current time ("18:21" as an illustrative example), the address being accessed ("abc.com" as an illustrative example), the name of the user who made the access ("X" since the user is the user X in this case), and an icon 401 for room creation to be described below.

A middle screen region 108b of the touch screen 108 displays a partial image (a screen at the start of viewing) of the web page (given image). In the present embodiment, a web page of a shopping site is shown as an illustrative example. However, the type of web page is not limited thereto. The user terminal X can display any part of the web page served by the web server 200 in the middle screen region 108b in accordance with a scroll operation (first operation) such as, for example, a swipe operation along the upper-lower direction on the middle screen region 108b or an operation on a scroll bar. Thus, the user can view a desired part of the web page by performing a scroll operation in the middle screen region 108b.

In an upper part of the middle screen region 108a, a communication partner terminal notification image 402, a video call notification image 403, and an own terminal notification image 404 are superimposed on the web page. The communication partner terminal notification image 402, the video call notification image 403, and the own terminal notification image 404 are each an image for notifying the user of the display mode of the middle screen region 108b. There are a plurality of types of display modes, including an own terminal mode for displaying an own terminal image, a communication partner terminal mode for displaying a communication partner terminal image, and a video call mode for displaying a video call image. Based on the programs included in the web page, the user terminal 100 of the present embodiment can switch the display mode to any of the plurality of types of display modes in accordance with a switching operation (second operation) such as, for example, a swipe operation along the left-right direction or an operation on an icon to be described below and can display an image corresponding to the display mode. At the start of the display of the web page, the display mode is set to the own terminal mode. Thus, in the middle screen region 108a, the screen of the user's own terminal (a partial image of the web page) is displayed, and also, the own terminal notification image 404 is highlighted, thereby notifying the user that the screen of the user's own terminal is displayed.

A lower screen region 108c of the touch screen 108 displays a call switching icon 405a for switching between a video call during which a video of the user himself/herself can be displayed in the communication partner terminal and an audio call during which a default screen is displayed instead of displaying a video of the user himself/herself in the communication partner terminal, a termination icon 405b for terminating P2P communication, an input field 406 used for chatting, and various icons 407 to 411 of the web browser. When P2P communication with the communication partner terminal has already been established, switching from a video call to an audio call or vice versa can be achieved by touching the call switching icon 405, the P2P communication (video call) can be terminated and an own terminal image can be displayed by touching the termination icon 405b, and a text, stamps, etc. can be inputted and the inputted text etc. can be transmitted to the communication partner terminal by touching the input field 406.

The icons 407 to 411 are icons displayed owing to the function of the web browser. Of these icons, the icon 409 is a sharing icon that is operated at the time of sharing a sharing link for starting video calling, screen sharing, etc. with the communication partner terminal. The sharing link includes, for example, text string information for identifying an address specific to a room created by the user. Clicking the sharing link allows an access to the web server 200 and an entry into the room created by the user. As described above, when the user accesses the web server 200 to display a web page, a plurality of icons and images are also displayed in addition to the web page, based on the programs included in that web page.

Referring back to FIG. 3, the signaling server 300, which received the communication enablement information at t1, executes a process for issuing an SDP (Session Description Protocol) to the user terminal X. At t3, the issued SDP is transmitted to the user terminal X and stored in a predetermined region of the RAM 102. The SDP includes, for example, information (information for establishing RTC peer connection) such as the media type (audio or video), the codec format, the IP address and the port number, the protocol used for data transfer (TCP, UDP, or the like), and the encryption key.

During a period in which the user terminal X displays the web page served by the web server 200, the user terminal X establishes sharing start conditions and transmits a sharing link to another user as shown at t4, whereby P2P communication with the user terminal owned by the other user can be established.

In FIG. 4, (b) to (d) show examples of the screen that appears from the establishment of the sharing start conditions until the transmission of the sharing link to another user (the user Y in FIG. 4). First, the user touches the icon 401 shown at (a) in FIG. 4, whereby a screen including a room creation icon 420 that reads "Create Room" as shown at (b) in FIG. 4 is displayed.

Next, the user touches the room creation icon 420, whereby a unique room used for P2P communication connection is created, and also, an address specific to this room (e.g., a room-specific URL created by adding an encryption key, an encrypted text, or the like to the end of a predetermined URL) is issued to create a sharing link including information for identifying the address. Also, by touching the room creation icon 420, the display mode is switched to a video call mode in preparation for the start of P2P communication. As a result, the image displayed in the middle screen region 108b is switched from an own terminal image to a video call image. Accordingly, in the screen shown at (c) in FIG. 4, the own terminal screen displaying the web page in the middle screen region 108b is switched to a screen including the text string "AUDIO". At the stage illustrated at (c) in FIG. 4, P2P communication has not yet been established and a video call has not yet started. Thus, the screen including the text string "AUDIO" is displayed as a video call screen. When the display mode is switched to the video call mode, the video call notification image 403 is highlighted.

P2P communication is established after the sharing link is notified to the communication partner terminal and then clicked by the user of the communication partner terminal. In FIG. 4, (c) illustrates an example where the sharing link is notified to the communication partner terminal utilizing a sharing function of the web browser. As shown at (c) in FIG. 4, the user touches the sharing icon 409 of the web browser, whereby the screen shown at (d) in FIG. 4 is displayed owing to the function of the web browser. On the screen shown at (d) in FIG. 4, a window 430 is superimposed over a lower half of the screen. The window 430 displays application icons 431 to 434 corresponding to applications that can be used for transmitting the sharing link including information for identifying the address specific to the created room to other specific users. By touching any of the application icons, the user X starts up the corresponding application to select the address or the like of another user (in this case, the user Y) and transmit the sharing link thereto. After the transmission of the sharing link using the application is completed, the screen shown at (c) in FIG. 4 is displayed on the touch screen 108 again, and the user terminal X is in the state of waiting for the connection from the user Y. In the connection waiting state, the screen shown at (c) in FIG. 4 is temporarily displayed. However, even in the connection waiting state, the display mode may be switched to the own terminal mode by performing a switching operation to display an own terminal image and to enable viewing of the web page, and the display mode may be automatically switched to the video call mode at the moment when the connection with the user Y is completed.

As described above, the user X can establish the sharing start conditions by performing a series of processes from the operation on the icon 401 → creation of the room (see (b) in FIG. 4) → the operation on the sharing icon 409 (see (c) in FIG. 4) → the operation on the application icon, and then can transmit the sharing link to the other user using the application. The method of notifying the sharing link is not limited to the example illustrated at (c) and (d) in FIG. 4, and the sharing link may be notified using an e-mail or the like. From the moment when the room is created, the user terminal X owned by the user X is in a state of accessing the room-specific URL.

In the user terminal Y that has received the sharing link, the user touches (clicks) the sharing link to access the web server 200 and enters the room created by the user X (by accessing the room-specific URL) to start processes for establishing P2P communication with the user terminal X. Upon touching the sharing link, as shown at t5 in FIG. 3, the web browser is launched in the user terminal Y and a web page request is transmitted to the web server 200. The web page request includes communication enablement information for enabling P2P communication of the user terminal Y with the user terminal X, which is the transmission source of the sharing address. Upon receipt of the web page request, the web server 200 transmits the communication enablement information to the signaling server 300.

At t6, a web page response is transmitted from the web server 200 to the user terminal Y The web page response also includes information for displaying the above-described given image and program files (such as a script and JavaScript^{®}). Thus, the web page served by the web server 200 is displayed on a touch screen 108 of the user terminal Y (as with (a) in FIG. 4), and P2P communication is established to enable video calling and screen sharing.

On the other hand, the signaling server 300, which received the communication enablement information at t5, executes a process for issuing an SDP to the user terminal Y, and at t7, the issued SDP is transmitted to the user terminal Y and stored in a predetermined region of a RAM 102. At t8 subsequent to t7, the received SDP is transmitted via the signaling server 300 to the user terminal X, which is the transmission source of the sharing link, and as shown at t9, the SDP from the user terminal Y is registered in the user terminal X.

At t10 subsequent to t9, the user terminal X transmits the SDP of the user terminal X, which is already stored at t3, to the user terminal Y via the signaling server 300, and as shown at t11, the SDP from the user terminal X is registered in the user terminal Y Thus, connection confirmation is executed between the user terminal X and the user terminal Y and a pair composed of the IP address and the port number for P2P communication is determined, whereby an RTC peer connection is established. As a result, P2P communication is established between the user terminal X and the user terminal Y, whereby a video call is started and screen sharing becomes possible.

In FIG. 4, (e) shows a screen when the P2P communication has been established and a video call with the user Y as the communication partner has started. After the start of the P2P communication, the user's own terminal transmits image data captured by the camera 105 and audio data collected by the microphone 106 to the communication partner terminal and receives image data and audio data similarly transmitted from the communication partner terminal, whereby it becomes possible to display the image transmitted from the communication partner terminal in the middle screen region 108b and to output the audio from the speaker 107. The transmission and reception of the image data and the audio data is performed every predetermined period of time (e.g., 50 msec). This enables the display of a video call screen. In FIG. 4, (e) shows the state where an image (moving image) including the user Y is displayed on the user terminal X.

After the start of the P2P communication, the user's own terminal transmits, to the communication partner terminal, identification information for enabling identification of an image (region) that is part of the web page and can be displayed in the user's own terminal in accordance with a scroll operation performed when in the own terminal mode and also receives identification information similarly transmitted from the communication partner terminal.

The identification information transmitted by the user's own terminal is, for example, information for identifying the coordinate position of a predetermined position (e.g., the position of the upper left corner) on an image displayed in the middle screen region 108b in accordance with a scroll operation performed when in the own terminal mode, with a specific position on the web page received when accessing the web server 200 (e.g., the position of the upper left corner of the web page or the position with the x-axis coordinate and the y-axis coordinate being 0) being the base point. The identification information received by the user's own terminal is, for example, information for identifying the coordinate position of a predetermined position (e.g., the position of the upper left corner) on an image displayed in a middle screen region 108b of the communication partner terminal in accordance with a scroll operation in the communication partner terminal when in the own terminal mode, with a specific position on the web page received by the communication partner terminal when accessing the web server 200 (e.g., the position of the upper left corner or the position with the x-axis coordinate and the y-axis coordinate being 0) being the base point. The transmission and reception of the identification information is performed every predetermined period of time (e.g., 100 msec). This makes it possible to identify in real time not only the image on the web page being viewed in the user's own terminal but also the image on the web page being viewed in the communication partner terminal.

Based on the programs included in the web page, the user terminal 100 switches the display mode to set a display mode corresponding to the switching operation, whereby an image corresponding to the thus-set display mode can be displayed in the middle screen region 108b of the user terminal 100. Regardless of which of the display modes is set, the user terminal 100 during the P2P communication transmits at least image data, audio data, and identification information to the communication partner terminal and receives image data, audio data, and identification information from the communication partner terminal.

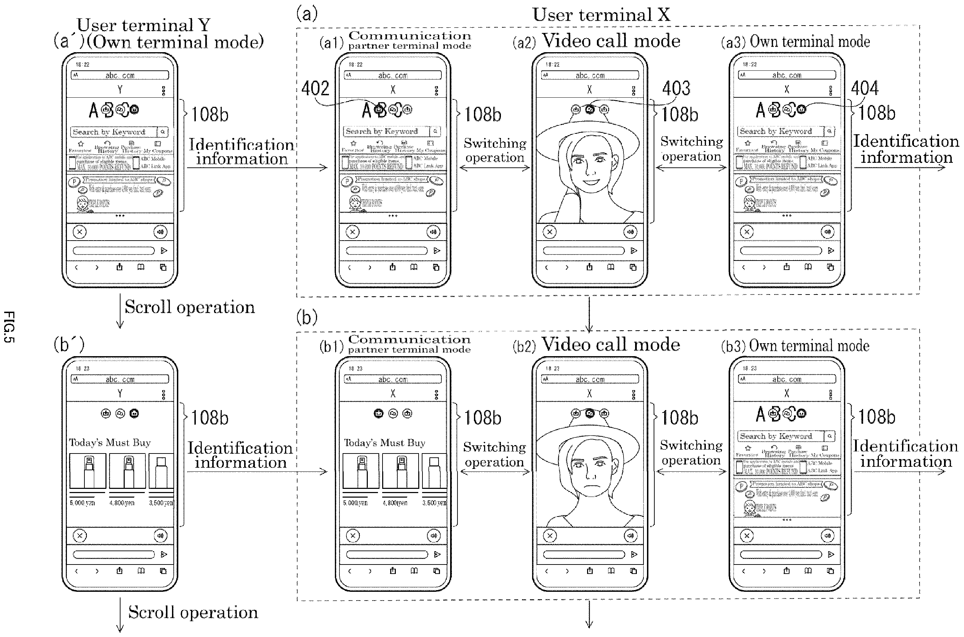

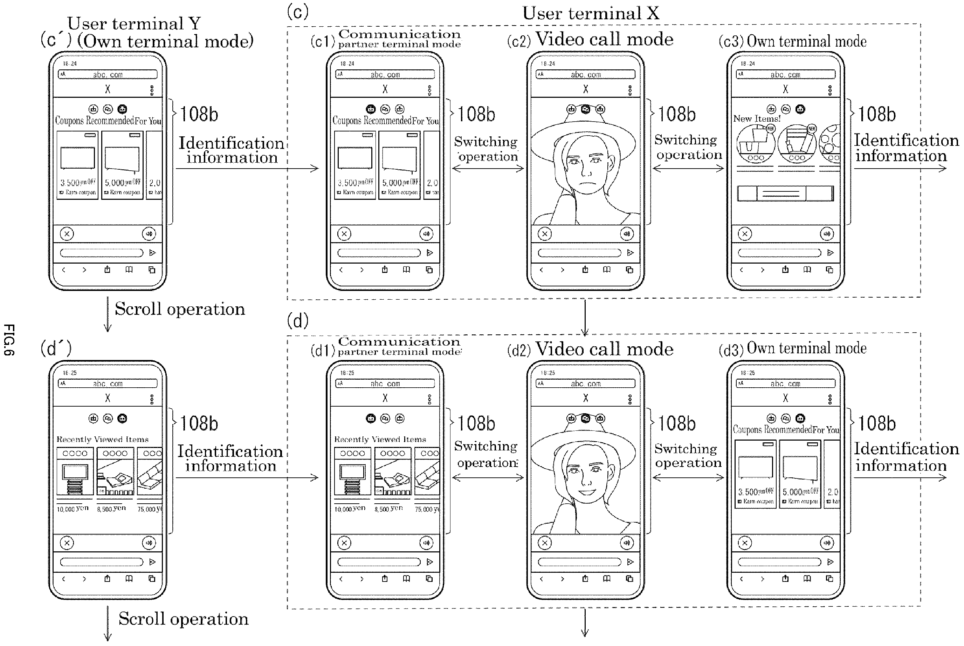

FIGs. 5 and 6 each show examples of a display screen on the touch screen 108 of the user terminal X during the P2P communication and examples of a display screen on the touch screen 108 of the communication partner terminal, the user terminal Y, when it is in the own terminal mode.

In FIG. 5, (a) shows an example of a display screen in the user terminal X, where (a1) shows an example of a display screen in the communication partner terminal mode, (a2) shows an example of a display screen in the video call mode, and (a3) shows an example of a display screen in the own terminal mode. When the display mode is set to, for example, the video call mode, as shown at (a2) in FIG. 5, an image (moving image) of the user Y, which is the communication partner, is displayed in the middle screen region 108b and audio is outputted from the speaker 107, based on the image data and the audio data transmitted from the user terminal Y As a result, the video call screen is displayed.

In the case where a switching operation of, for example, swiping from the right to the left is received when the display screen in the video call mode is displayed, the display mode is switched to the own terminal mode as shown at (a3) in FIG. 5, whereby a display screen in the own terminal mode is displayed and the own terminal notification image 404 is highlighted. In FIG. 5, (a3) shows an example where the screen at the start of viewing the web page is displayed.

When in the own terminal mode, any desired part of the web page can be displayed in accordance with a scroll operation performed in the user terminal X, which is the user's own terminal. As described above, regardless of which of the display modes is set, the user terminal 100 transmits, to the user terminal Y as the communication partner terminal, identification information that enables identification of the part of the web page (the image in the web page) corresponding to the scroll operation performed when in the own terminal mode every predetermined period of time during the P2P communication. Thus, the image of the part corresponding to the scroll operation performed in the user terminal X when in the own terminal mode and being viewed by the user X can be identified on the user terminal Y side. Also, when in the own terminal mode, audio from the user Y is outputted from the speaker 107 based on the audio data transmitted from the user terminal Y

When a switching operation of, for example, swiping from the left to the right is received in the state where a display screen in the own terminal mode is displayed, the display mode is switched to the video call mode as shown at (a2) in FIG. 5, whereby a display screen in the video call mode is displayed and the video call notification image 403 is highlighted. As a result, the image from the communication partner terminal is displayed in the middle screen region 108b and the audio is outputted from the speaker 107.

When a switching operation of, for example, swiping from the left to the right is received in the state where a display screen in the video call mode is displayed, the display mode is switched to the communication partner terminal mode as shown at (a1) in FIG. 5, whereby a display screen in the communication partner terminal mode is displayed and the communication partner terminal notification image 402 is highlighted. As described above, similarly to the user terminal X, the user terminal Y as the communication partner terminal transmits, regardless of which of the display modes is set, identification information that enables identification of the part of the web page (the image in the web page) corresponding to the scroll operation performed when the user terminal Y is in the own terminal mode to the user terminal X as the communication partner terminal every predetermined period of time during the P2P communication. Thus, the image of the part of the web page corresponding to the scroll operation performed in the user terminal Y when in the own terminal mode and being viewed by the user Y can be identified on the user terminal X side.

In FIG. 5, (a') shows an example where the user terminal Y displays the screen at the start of viewing the web page, and identification information that enables identification of this screen is transmitted to the user terminal X. Accordingly, when the display mode set in the user terminal X is the communication partner terminal mode, the screen at the start of viewing the web page is displayed in the middle screen region 108b of the user terminal X as shown at (a') in FIG. 5, based on the identification information transmitted from the user terminal Y Thus, the image of the part of the web page corresponding to the operation performed in the user terminal Y when in the own terminal mode and being viewed by the user Y can be identified on the user terminal X side. Also, when in the communication partner terminal mode, audio from the user Y is outputted from the speaker 107 based on the audio data transmitted from the user terminal Y

When, for example, a swipe operation from the right to the left is received in the state where a display screen in the communication partner terminal mode is displayed, the display mode is switched to the video call mode, whereby a display screen in the video call mode is displayed and the video call notification image 403 is highlighted. As a result, the image from the communication partner terminal is displayed in the middle screen region 108b and the audio is outputted from the speaker 107. In the manner described above, an image to be displayed in the middle screen region 108b of the user terminal 100 can be switched to any of an own terminal image, a communication partner terminal image, or a video call image in accordance with a switching operation performed in the user terminal 100.

Even if an operation such as, for example, swiping from the right to the left is further performed on the display screen in the own terminal mode, the display mode is not switched to any other mode such as the communication partner terminal mode. Also, even if an operation such as, for example, swiping from the left to the right is further performed on the display screen in the communication partner terminal mode, the display mode is not switched to any other mode such as the own terminal mode. That is, switching from the display screen in the own terminal mode to the display screen in the communication partner terminal mode and switching from the display screen in the communication partner terminal mode to the display screen in the own terminal mode are regulated.

In FIG. 5, (b) and (b') show examples of a display screen when the part of the web page being viewed by the user Y changes. In FIG. 5, (b') shows an example of a display screen in the case where, in accordance with a scroll operation performed by the user Y when the user terminal Y is in the own terminal mode, part of the web page including, for example, images of items indicated as "Today's Must Buy" etc. is displayed in the middle screen region 108b of the user terminal Y As described above, regardless of which of the display modes is set, the user terminal Y transmits identification information for identifying an image that can be displayed in the middle screen region 108b of the user terminal Y when in the own terminal mode every predetermined period of time, and the user terminal X receives the identification information. Thus, when the user X switches the display mode of the user terminal X to the communication partner terminal mode, the part of the web page including the images of the items indicated as "Today's Must Buy" etc. is displayed in the middle screen region 108b of the user terminal X as shown at (b1) in FIG. 5, thereby allowing the user X to know, in real time, the part that the user Y is viewing.

FIG. 6 shows examples of display screens when the part that the user X is viewing and when the part that the user Y is viewing change, respectively. In FIG. 6, (c') shows an example of a display screen in the case where, in accordance with a scroll operation performed by the user Y when the user terminal Y is in the own terminal mode, part of the web page including, for example, images of coupons indicated as "Coupons Recommended For You" etc. is displayed in the middle screen region 108b of the user terminal Y In this case, when the user X switches the display mode of the user terminal X to the communication partner terminal mode, the part of the web page including the images etc. of the coupons indicated as "Coupons Recommended For You" is displayed in the middle screen region 108b of the user terminal X as shown at (c1) in FIG. 6, thereby allowing the user X to know, in real time, the part that the user Y is viewing.

Similarly, in FIG. 6, (c3) shows an example of a display screen in the case where, in accordance with a scroll operation performed by the user X when the user terminal X is in the own terminal mode, part of the web page including, for example, images of items indicated as "New Items!" etc. is displayed in the middle screen region 108b of the user terminal X. As described above, the user terminal X transmits identification information for identifying an image displayed in the middle screen region 108b every predetermined period of time, and the user terminal Y receives the identification information. Thus, although not shown in FIG. 6, when the user Y switches the display mode of the user terminal Y to the communication partner terminal mode, the part of the web page including the images of the items indicated as "New Items!" etc. is displayed in the middle screen region 108b of the user terminal Y, thereby allowing the user Y to know, in real time, the part that the user X is viewing.

The same applies to (d) and (d') in FIG. 6, and when the user X switches the display mode of the user terminal X to the communication partner terminal mode, the part of the web page including the images of the items indicated as "Recently Viewed Items" etc. is displayed in the middle screen region 108b of the user terminal X as shown at (d1) in FIG. 6, thereby allowing the user X to know, in real time, the part that the user Y is viewing. Further, although not shown in FIG. 6, when the user Y switches the display mode of the user terminal Y to the communication partner terminal mode, the part of the web page including the images of the coupons indicated as "Coupons Recommended For You" etc. is displayed in the middle screen region 108b of the user terminal Y (the same part as shown at (d3) in FIG. 6), thereby allowing the user Y to know, in real time, the part that the user X is viewing.

The user terminal 100 controls the display screen as illustrated in FIG.s 4 to 6 by performing the respective processes based on the programs included in the above-described web page. In the following, as illustrative examples of processes executed based on the programs included in the web page, the following processes will be described: a drawing process for drawing, in the RAM 102, an image to be displayed on the touch screen 108; an image identification process for identifying an image (part) of the web page that can be displayed in the middle screen region 108b of each of the plurality of user terminals 100 when in the own terminal mode; and a display process for switching the display mode to a display mode corresponding to a switching operation and displaying an image corresponding to the display mode in the middle screen region 108b.

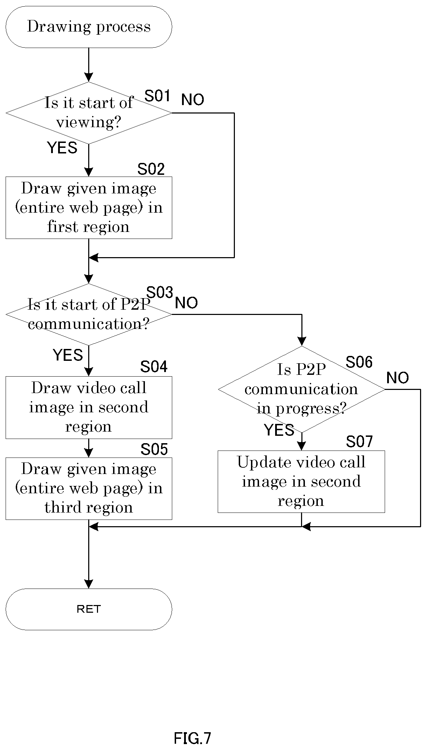

FIG. 7 is a flowchart illustrating the drawing process. From the time when the user terminal 100 accesses the web server 200 to receive a web page until the end of viewing the web page, the user terminal 100 repeatedly executes the drawing process every predetermined period of time (e.g., 50 msec) based on the programs included in the web page.

In Step S01, it is determined whether it is the time when the user terminal 100 accesses the web server 200 to start viewing in response to a web page response. If it is determined that it is the start of viewing, the process advances to Step S02, in which the entire web page as a given image is drawn in a predetermined first region of the RAM 102 of the user terminal 100. When in the own terminal mode, of the web page drawn in the first region, a region corresponding to a scroll operation can be displayed in the middle screen region 108b. On the other hand, if it is not determined that it is the start of viewing, the process advances to Step S03 because the web page is already being viewed and the entire web page has already been drawn.

In Step S03, it is determined whether it is the time when P2P communication is established to start the P2P communication. If it is determined that it is the start of P2P communication, the process advances to Step S04, in which a video call image is drawn in a predetermined second region of the RAM 102 based on image data received from the communication partner terminal. When in the video call mode, the image drawn in the second region can be displayed in the middle screen region 108b.

In Step S05, the entire web page as the given image is drawn in a predetermined third region of the RAM 102, and the drawing process is terminated. When in the communication partner terminal mode, of the web page drawn in the third region, the image of the region corresponding to the identification information received from the communication partner terminal can be displayed in the middle screen region 108b.

On the other hand, if it is not determined that it is the start of P2P communication in Step S03, the process advances to Step S06, in which whether P2P communication is in progress is determined. If it is determined that P2P communication is in progress, the process advances to Step S07, in which the video call image in the second region is updated to a video call image that is based on the image data received from the communication partner terminal, and the drawing process is terminated. This allows a moving image to be displayed as the video call image. On the other hand, if it is not determined that P2P communication is in progress, the drawing process is terminated without executing any further process.

As described above, the drawing process draws images that serves as the basis for images to be displayed in the middle screen region 108b. The above description regarding the drawing process in the present embodiment is directed to an example where an image used in the own terminal mode is drawn in the first region. It should be noted, however, that the drawing in the first region may be executed using a function of the web browser, and Steps S01 and S02 in the drawing process of the present embodiment may be omitted.

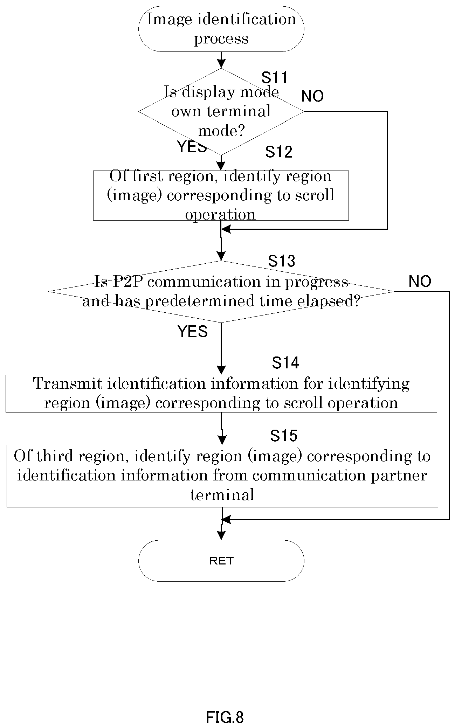

FIG. 8 is a flowchart illustrating the image identification process. From the time when the user terminal 100 accesses the web server 200 to receive a web page until the end of viewing the web page, the user terminal 100 repeatedly executes the image identification process every predetermined period of time (e.g., 50 msec) based on the programs included in the web page.

In Step S11, it is determined whether the display mode is the own terminal mode. Note here that the display mode is set in the display process to be described below (e.g., Steps S21 and S23 to S25). If it is determined that the display mode is the own terminal mode in Step S11, the process advances to Step S12, in which, of the web page drawn in the first region of the RAM 102, a region (image) to be displayed in the middle screen region 108b is identified in accordance with a scroll operation performed in the user's own terminal, and then, the process advances to Step S13. Thus, the image to be displayed in the middle screen region 108b when in the own terminal mode is identified. The region (image) identified in Step S12 is maintained after the display mode is switched to any other display mode, and the region (image) thus maintained is displayed in the middle screen region 108b when the display mode is switched to the own terminal mode again. On the other hand, if it is not determined that the display mode is the own terminal mode in Step S11, the process advances to Step S13 without executing any further process.

In Step S13, it is determined whether the P2P communication is in progress and a predetermined time as a time interval for transmission and reception of the identification information has elapsed. If it is not determined that the P2P communication is in progress and the predetermined time has elapsed, the image identification process is terminated without executing any further process. On the other hand, if it is determined that the P2P communication is in progress and the predetermined time has elapsed, identification information for enabling identification of the region (image) identified in Step S12 in accordance with the scroll operation is transmitted to the communication partner terminal in Step 14, regardless of which of the display modes is set. As a result, the image to be displayed in the middle screen region 108b when in the own terminal mode can be identified also in the communication partner terminal.

In Step S15, of the web page drawn in the third region of the RAM 102 of the user's own terminal, a region (image) to be displayed in the middle screen region 108b based on the identification information from the communication partner terminal is identified, and then the image identification process is terminated. As a result, the image to be displayed in the middle screen region 108b when in the communication partner terminal mode can be identified. The identification information from the communication partner terminal is transmitted from the communication partner terminal and received by the user's own terminal, regardless of which of the images is displayed in the communication partner terminal and which of the images is displayed in the user's own terminal.

As described above, the image identification process identifies images to be displayed in the middle screen region 108b. The above description regarding the image identification process in the present embodiment is directed to an example where a region (image) to be displayed when in the own terminal mode is also identified. It should be noted, however, a region (image) to be displayed when in the own terminal mode may be identified using the function of the web browser, and Steps S11 and S12 in the image identification process may be omitted. In this case, in S14, the region (image) identified in accordance with the scroll operation using the function of the web browser may be used to transmit the identification information for identifying the region (image).

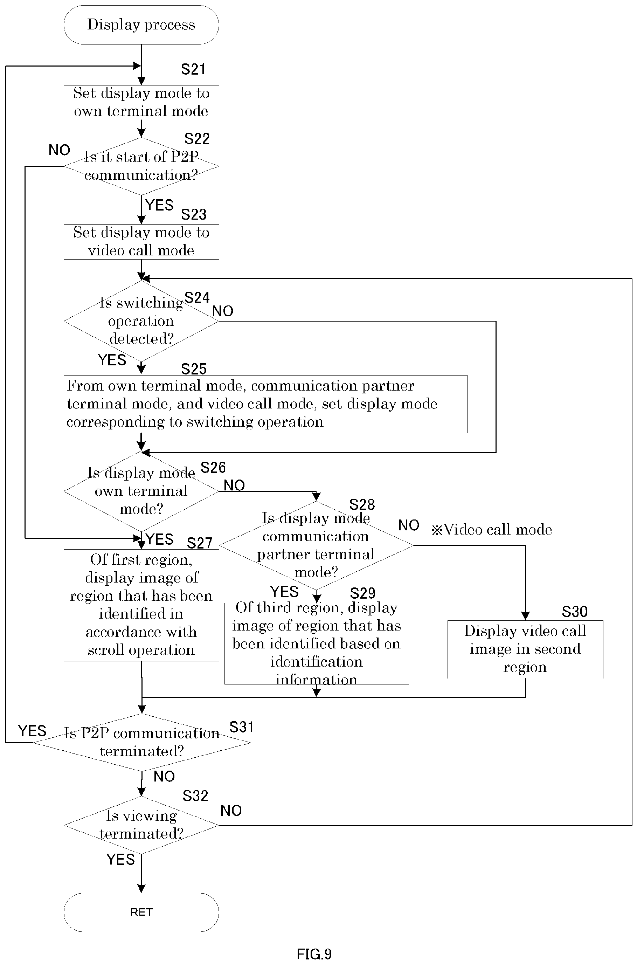

FIG. 9 is a flowchart illustrating the display process. From the time when the user terminal 100 accesses the web server 200 to receive a web page until the end of viewing the web page, the user terminal 100 executes the display process based on the programs included in the web page.

In Step S21, since it is the start of viewing the web page or the like, the display mode is set to the own terminal mode. When in the own terminal mode, a process for highlighting the own terminal notification image 404 is also executed. In Step S22, it is determined whether it is the start of P2P communication. In Step S22, whether it is the start of P2P communication is determined based on whether a room has been created. However, instead of this, whether it is the start of P2P communication may be determined based on whether P2P communication has actually been established.

If it is not determined that it is the start of P2P communication in Step S22, the process advances to Step S27, in which, of the web page drawn in the first region of the RAM 102, the image of the region identified in accordance with the scroll operation performed in the own terminal in S 12 is displayed in the middle screen region 108b. Thus, when P2P communication is not in progress or when the own terminal mode is set, the image of the part of the web page corresponding to the scroll operation is displayed in the middle screen region 108b to be viewable (see (a) in FIG. 4 etc.).

On the other hand, if it is determined that it is the start of P2P communication in Step S22, the process advances to Step S23, in which the video call mode is set as a default display mode at the start (see (c) in FIG. 4 etc.). Also, a process for highlighting the video call notification image 403 is executed. The default display mode is not limited to the video call mode and may be any other display mode, and the own terminal mode may be maintained.

In Step S24, it is determined whether a switching operation is detected. If a switching operation is detected, the process advances to Step S25, in which the display mode corresponding to the switching operation is set from the own terminal mode, the communication partner terminal mode, and the video call mode, and then the process advances to Step S26. Also, of the communication partner terminal notification image 402, the video call notification image 403, and the own terminal notification image 404, the notification image corresponding to the thus-set display mode is highlighted. It is to be noted that switching from the own terminal mode to the communication partner terminal mode without via the video call mode and switching from the communication partner terminal mode to the own terminal mode without via the video call mode are regulated. On the other hand, if it is not determined that a switching operation is detected in Step S24, the process advances to Step S26.

In Step S26, it is determined whether the set display mode is the own terminal mode. If it is determined that the display mode is the own terminal mode, the process advances to Step S27, in which the own terminal image is displayed as described above. It is also possible to switch the displayed image to an own terminal image by performing a switching operation for switching the display mode to the own terminal mode at the will and a desired timing of the user. On the other hand, if it is not determined that the display mode is the own terminal mode, the process advances to Step S28, in which it is determined whether the set display mode is the communication partner terminal mode.

If it is determined that the display mode is the communication partner terminal mode in Step S28, the process advances to Step S29, in which, of the web page drawn in the third region of the RAM 102, the image of the region identified in Step 15 based on the identification information from the communication partner terminal is displayed in the middle screen region 108b. As a result, when the communication partner terminal mode is set during the P2P communication, the user can know the image that is displayed in the communication partner terminal in accordance with a scroll operation performed when in the own terminal mode in the communication partner terminal. It is also possible to switch the displayed image to an own terminal image by performing a switching operation for switching the display mode to the communication partner terminal mode at the will and a desired timing of the user, regardless of the presence or absence of an operation with respect to the communication partner terminal (without the need of a sharing operation etc. in the communication partner terminal).

On the other hand, if it is not determined that the display mode is the communication partner terminal mode in Step S28, it means that the currently set display mode is the video call mode, and the process advances to Step S30, in which the video call image drawn in the second region of the RAM 102 in Step S04 is displayed in the middle screen region 108b. Thus, when the video call mode is set during the P2P communication, the user can watch an image (moving image) captured in the communication partner terminal and know the state of the communication partner user. As described above, during the P2P communication, regardless of which of the display modes is set, audio from the communication partner user can be outputted based on the audio data from the communication partner terminal.

It should be noted that, even when the display mode is set to the video call mode, if a video call is switched to an audio call without a video in accordance with an operation on a call switching icon 405a in the communication partner terminal, a predetermined screen (e.g., a screen including a text string such as "AUDIO" as shown at (c) in FIG. 4 or a screen displaying the user name of the communication partner terminal, a character image set by the user, etc.) is displayed in the middle screen region 108b in Step S30.

In Step S31, it is determined whether the P2P communication is terminated by a touch operation on the termination icon 405. If it is determined that the P2P communication is terminated, the process advances to Step S21 in which a process for displaying an own terminal image is executed. On the other hand, if it is not determined that the P2P communication is terminated, the process advances to Step S32, in which it is determined whether the viewing is terminated. In Step S32, it is determined that the viewing is terminated in the case where, for example, the web browser is terminated or the access to the web server 200 is terminated.

If it is not determined that the viewing is terminated, the process advances to Step S24, in which switching of the display mode and a process for displaying an image corresponding to the display mode is executed. On the other hand, if it is determined that the viewing is terminated, the display process is terminated.

### <Examples of Effects of First Embodiment>

(1) Based on the programs included in the web page response from the web server 200, the user terminal 100 (e.g., the user terminal X) in the above embodiment outputs identification information for enabling another user terminal 100 (e.g., the user terminal Y that is in P2P communication with the user terminal X) to identify, from within the web page, a region (image) that can be displayed in accordance with a scroll operation on the touch screen 108 of the user terminal X as shown in Step S14 in FIG. 8, and also receives identification information for enabling identification of a region (image) that can be displayed in accordance with a scroll operation on the touch screen 108 of the user terminal Y as shown in Step S15 in FIG. 8. Further, based on the programs included in the web page response from the web server 200, the user terminal X switches, in accordance with a switching operation on the touch screen 108, the image to be displayed on the touch screen 108 (the middle screen region 108b) of the user terminal X to any of the plurality of types of images including an image that is part of the web page corresponding to a scroll operation performed in the user terminal and an image identified based on the identification information received from the user terminal Y, as shown in Steps S24 to S30 in FIG. 9 etc. Thus, by accessing the web server 200, a certain user (e.g., the user X) can bidirectionally share, with another user (e.g., the user Y), which part of the web page each user is viewing, and in addition, it is possible to switch the displayed image between an image (part) of the web page being viewed in the user's own terminal (the user terminal X) and an image (part) of the web page being viewed in the communication partner terminal (the user terminal Y) by a simple operation such as a swipe operation performed at the will of the user X. As a result, the user X and the user Y can recognize the image being viewed by the other user at their own timing, and this allows smooth communication between them.
(2) The plurality of types of images switched by a switching operation include a video call image between the user's own terminal and the communication partner terminal, as shown in FIG. 5 etc. With this configuration, the user X and the user Y not only can recognize the image being viewed in the other user's terminal but also can know the state of the other user, and this allows still smoother communication between them. Also, in the case where a video call is switched to an audio call without a video in accordance with an operation on the call switching icon 405a in the communication partner terminal, the plurality of types of images to be switched by a switching operation include, instead of the video call image, a predetermined image as shown at (c) in FIG. 4. With this configuration, it becomes possible to prevent a video of the user himself/herself from being displayed in the communication partner terminal depending on the user's circumstances or preference.
(3) Switching from the own terminal mode to the communication partner terminal mode without via the video call mode and switching from the communication partner terminal mode to the own terminal mode without via the video call mode are regulated. With this configuration, since direct switching from the own terminal mode to the communication partner terminal mode and direct switching from the communication partner terminal mode to the own terminal mode do not take place, it is possible to reduce the risk that the user may misrecognize the screen displayed in the user's own terminal as the screen displayed in the communication partner terminal or may misrecognize the screen displayed in the communication partner terminal as the screen displayed in the user's own terminal.
(4) Regardless of which of the display modes is set, the plurality of types of notification images 402 to 404 corresponding to the respective display modes are displayed, and the notification image corresponding to the currently set display mode is highlighted (displayed in a different manner from those for the other notification images). Thus, the currently set display mode can be notified to the user in an easy-to-understand manner and thus can prevent the user's misrecognition.
   As shown at (a) in FIG. 4 etc., the notification images 402 to 404 corresponding to the respective display modes are displayed in a state of being arranged in a predetermined order in the horizontal direction, and in consideration of this arrangement, a switching operation for switching the display mode is also defined as a moving gesture along the horizontal direction on the screen, i.e., a swipe operation toward the left and the right. This can make the switching operation more intuitive.
(5) The identification information transmitted by the user's own terminal and the other terminal is, for example, information for identifying the coordinate position of a predetermined position in an image displayed in the middle screen region 108b in accordance with a scroll operation performed when in the own terminal mode, with a specific position on a web page received when accessing the web server 200 being the base point, i.e., region information for identifying a region to be displayed in accordance with the scroll operation. This can reduce the data volume of the identification information and also can reduce the processing load for identifying images.

### Second Embodiment

The first embodiment illustrates examples (a program, method, and information processing device) in which user terminals that have established communication via WebRTC (including P2P communication) or the like between them all execute (i.e., each of the user terminals executes) processes for enabling identification of an own terminal image (image corresponding to a scroll operation) in the other user terminals (e.g., transmitting identification information to the other terminals). However, for example, considering the case where a certain user offers an explanation, presentation, etc. about a given image and the rest of the users receive the explanation, presentation, etc., the user who offers the explanation, presentation, etc. may focus on the explanation, presentation, etc. and thus it may not be absolutely necessary for him/her to know the images being displayed on the user terminals used by the other users. In this case, it is useless to execute a process for enabling the certain user terminal (for example, the terminal of the user who offers an explanation, presentation, etc.) to identify images displayed in the user terminals used by the other users. In light of the use under such circumstances, the second embodiment illustrates examples of a program, method, and information processing device, according to which, of user terminals that have established communication between them, at least one user terminal executes a process for enabling identification of an own terminal image in other terminals, whereas user terminals other than the at least one user terminal do not execute a process for enabling identification of their own terminal images in the other terminal(s) (e.g., they do not transmit identification information to the other terminal(s)).

The following description is directed to an example where the user X described in the first embodiment offers an explanation, presentation, etc. about the contents of a web page (an example of a given image) to the user Y, and for this purpose, the user X has created a room using the user terminal X and transmitted a sharing link to the user terminal Y, whereby communication has been established between the user terminals X and Y

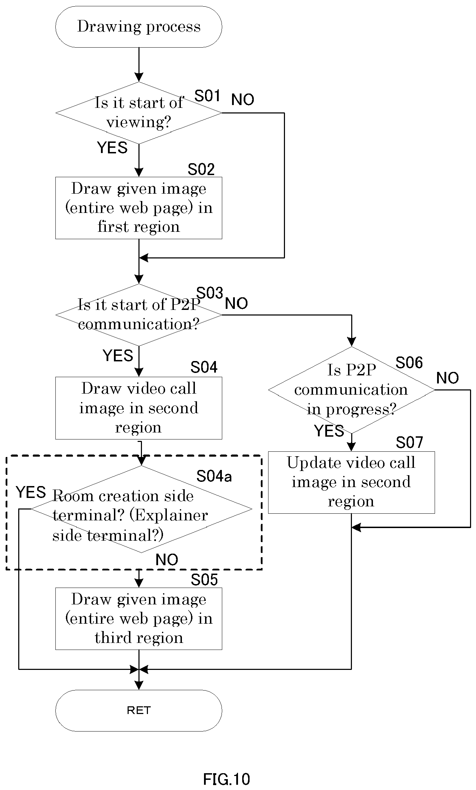

FIGs. 10 to 12 are flowcharts illustrating a drawing process, an image identification process, and a display process in the second embodiment, respectively. In the following, explanations regarding the same matters as those in the first embodiment are omitted, and only matters different from those in the first embodiment will be described. In FIG.s 10 to 12, processes surrounded by a dotted line are different from the corresponding processes in the first embodiment.

In the drawing process illustrated in FIG. 10, the process advances from Step S04 to Step S04a, in which it is determined whether the user terminal executing the drawing process is the user terminal on the room creation side. In the user terminal, upon creation of a room as shown at (b) in FIG. 4, information that enables identification of the creation of the room is stored in a predetermined region of the RAM 102. The information that enables identification of the creation of the room is cleared when communication with the other terminal is not established within a predetermined period of time and when communication with the other terminal is terminated. In Step S04a, whether the user terminal executing the drawing process is the user terminal on the room creation side is determined by determining whether the information that enables identification of the creation of the room is stored.

If it is determined that the user terminal is on the room creation side (e.g., when the user terminal X is executing the process) in Step S04a, the user terminal does not display an image displayed on the other terminal (e.g., the user terminal Y), and thus the drawing process is terminated. On the other hand, if it is not determined that the user terminal is on the room creation side (e.g., when the user terminal Y is executing the process) in Step S04a, the process advances to Step S05, in which the entire web page as the given image is drawn in a third region of the RAM 102 to enable the display of an image displayed in the other terminal (e.g., the user terminal X), and then the drawing process is terminated.

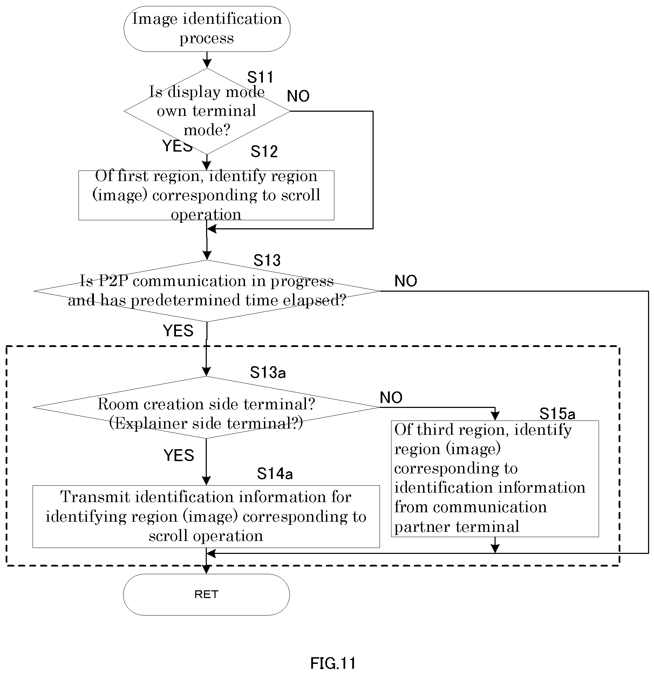

In the image identification process illustrated in FIG. 11, if it is determined that the P2P communication is in progress and a predetermined time has elapsed in Step S13, the process advances to Step S13a, in which it is determined whether the user terminal executing the image identification process is the user terminal on the room creation side. If it is determined in Step S13a that the user terminal executing the image identification process is the user terminal on the room creation side, the process advances to Step 14a, in which identification information for enabling identification of a region (image) identified in Step S12 in accordance with the scroll operation is transmitted to the communication partner terminal, and then the image identification process is terminated. Thus, the user terminal on the room creation side can enable the communication partner terminal to identify the own terminal image from the start of communication without the need for any operation etc. to enable sharing.

On the other hand, if it is not determined in Step S13a that the user terminal is on the room creation side, the process advances to Step S15a, in which, of the web page drawn in the third region of the RAM 102 of the user's own terminal, a region (image) to be displayed in the middle screen region 108b is identified based on the identification information from the communication partner terminal, and then the image identification process is terminated. As a result, the user terminal that is not on the room creation side can identify the image to be displayed in the middle screen region 108b when in the communication partner terminal mode from the start of the communication without the need for any operation etc. to request permission for sharing. If it is not determined in Step S13a that the user terminal executing the image identification process is on the room creation side, the process corresponding to Step S14a is not executed, and accordingly, the identification information for enabling identification of the region (image) identified in Step S12 in accordance with the scroll operation is not transmitted to the user terminal on the room creation side. This can prevent the execution of unnecessary processes, whereby the processing load can be reduced.

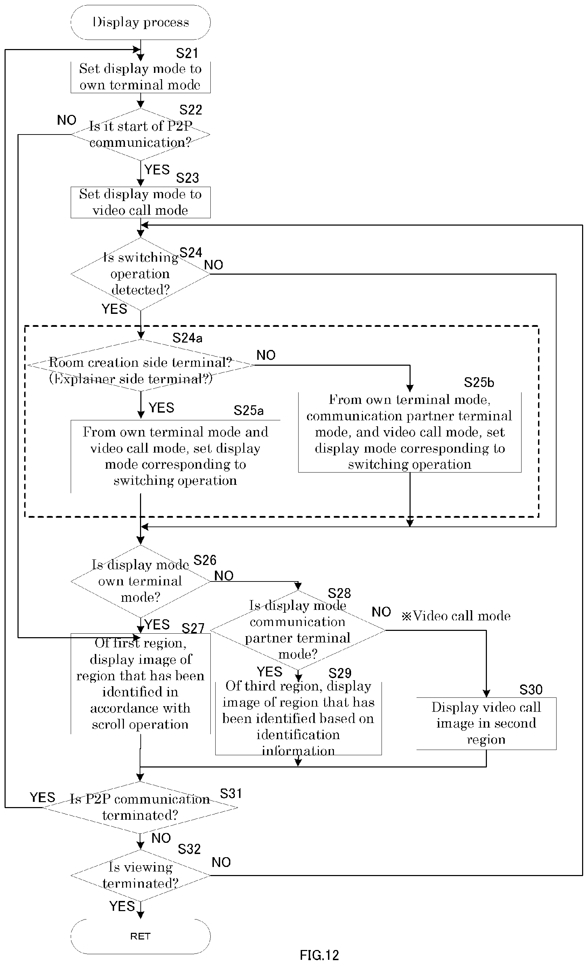

In the display process illustrated in FIG. 12, if it is determined in Step S24 that a switching operation is detected, the process advances to Step S24a, in which it is determined whether the user terminal executing the display process is the user terminal on the room creation side. If it is determined in Step S24a that the user terminal executing the display process is on the room creation side, the process advances to Step S25a, in which, from two display modes, namely, the own terminal mode and the video call mode, the display mode corresponding to the switching operation is set, and then the process advances to Step S26. Thus, in the user terminal on the room creation side (the user terminal on the side offering an explanation etc.), the display mode can be switched to either one of the own terminal mode and the video call mode.

On the other hand, if it is not determined in Step S24a that the user terminal executing the display process is on the room creation side, the process advances to Step S25b, in which, from three display modes, namely, the own terminal mode, the communication partner terminal mode, and the video call mode, the display mode corresponding to the switching operation is set, and then the process advances to Step S26. Thus, in the user terminal that is not on the room creation side (the user terminal on the side receiving the explanation etc.), the display mode can be switched to any one of the own terminal mode, the communication partner terminal mode, and the video call mode.

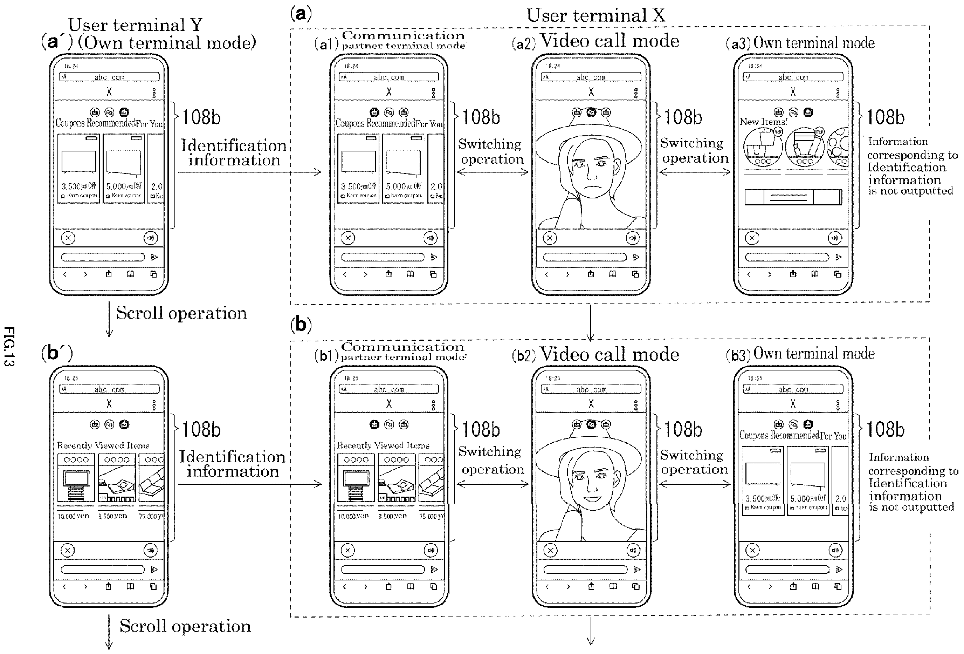

FIG. 13 shows examples of a display screen on the touch screen 108 of the user terminal X, which is the user terminal on the room creation side, during P2P communication, and examples of a display screen on the touch screen 108 of the user terminal Y, which is not on the room creation side.

In FIG. 13, (a') shows an example of a screen of the user terminal X displaying the part of the web page that the user X is explaining. As shown in Step S25a in FIG. 12, the user terminal X can switch the display mode to the own terminal mode and the video call mode, and regardless of which of the display modes is set, the identification information is transmitted as shown in Step S14a in FIG. 11. Also, in the user terminal X, regardless of which of the display modes is set, the video call image is updated as shown in Step 14a in FIG. 11 as shown in Step S07 in FIG. 10, and also, audio (audio data) inputted to the microphone 106 of the user terminal X is transmitted and audio based on audio data from the user terminal Y, which is the communication partner terminal, is outputted from the speaker 107. Thus, audio from the user X can be transmitted to the user Y and the user X can listen to audio from the user Y, whereby the user X can have smooth communication with the user Y At (a') in FIG. 13, the communication partner terminal notification image 402 is displayed. However, since the user terminal X cannot switch the display mode to the communication partner terminal mode in the second embodiment, the communication partner terminal notification image 402 may be displayed in gray or may be hidden.

On the other hand, as shown in Step S25b in FIG. 12, the user terminal Y can switch the display mode to the own terminal mode, the communication partner terminal mode, and the video call mode at the will and a desired timing of the user. Further, regardless of which of the display modes is set, the user terminal Y does not transmit (output) identification information for identifying the image displayed in the user terminal Y, whereas it receives identification information from the user terminal X, which is the communication partner terminal. Also, in the user terminal Y, regardless of which of the display modes is set, the video call image is updated as shown in Step S07 of FIG. 10, and also, audio (audio data) inputted to the microphone 106 of the user terminal Y is transmitted and audio based on audio data from the user terminal X, which is the communication partner terminal, is outputted from the speaker 107. Thus, the user Y can listen to audio from the user X and audio from the user Y can be transmitted to the user X, whereby the user Y can have smooth communication with the user X.

In FIG. 13, (a) shows an example of a display screen in the user terminal Y, where (a1) shows an example of a display screen in the communication partner terminal mode, (a2) shows an example of a display screen in the video call mode, and (a3) shows an example of a display screen in the own terminal mode. The user Y can switch the display mode at the will and a desired timing of the user Y without the need of a sharing operation etc. with respect to the user terminal X, whereby the user Y can view the part that the user X is explaining by switching to the communication partner terminal mode, can view part that is different from the part that the user X is explaining and the user Y himself/herself wants to see by switching to the own terminal mode, and can view the part that the user X is explaining by further switching to the communication partner terminal mode.

In FIG. 13, (b) and (b') show examples of a display screen when the part being viewed by the user X changes. In FIG. 13, (b') shows an example where, in accordance with a scroll operation of the user X in the user terminal X, part of the web page including, for example, images of items indicated as "Recently Viewed Items" etc. is displayed in the middle screen region 108b of the user terminal X. As described above, regardless of which of the display modes is set, the user terminal X transmits identification information for identifying an image that can be displayed in the middle screen region 108b of the user terminal X when in the own terminal mode every predetermined period of time, and the user terminal Y receives the identification information. Thus, when the user Y switches the display mode of the user terminal Y to the communication partner terminal mode, the part of the web page including the images of the items indicated as "Recently Viewed Items" etc. is displayed in the middle screen region 108b of the user terminal Y as shown at (b 1) in FIG. 13, thereby allowing the user Y to know, in real time, the part that the user X is viewing while listening to the explanation offered by the user X. Further, for example, if the user Y noted some point that caught his/her attention after listening to the explanation offered by the user X at (a') in FIG. 13, the user Y can switch the display mode to the own terminal mode at the will and a desired timing of the user Y and can view the part that the user X explained at the timing shown at (a') in FIG. 13 again. This improves the convenience of the user on the side receiving an explanation, presentation, etc. In addition, this allows the user on the side offering an explanation, presentation, etc. to focus on the explanation, presentation, etc.

### Modifications

Modifications and the like of the above embodiments will be described below.
(1) In the above embodiments, an own terminal image, a communication partner terminal image, and a video call image are given as examples of the plurality of types of images to be switched. It should be noted that, as long as an own terminal image and a communication partner terminal image are included in the plurality of types of images, any other image such as a video call image need not necessarily be included, and further, even when the plurality of types of images include an image other than the own terminal image and the communication partner terminal image, the other image is not limited to the video call image. Instead of or in addition to the video call image, the plurality of types of images to be switched may include, for example, a chat image that enables chatting between a plurality of user terminals and displays the message history transmitted and received during the chatting, a predetermined image to be displayed during an audio call (a video call image is not displayed), and the like.
(2) The first embodiment and the above modification each illustrate an example where identification information for enabling identification of an own terminal image is transmitted to the communication partner terminal after the establishment of P2P communication. It should be noted that the present disclosure is not limited thereto and may be configured such that the user of the own terminal can select whether or not to transmit the identification information to the communication partner terminal. For example, a sharing icon may be provided, and upon detection of an operation on the sharing icon, the user terminal may be controlled so as to transmit the identification information to the communication partner terminal, thereby allowing the display of the own terminal image in the communication partner terminal, and upon detection of an operation on the sharing icon while the user terminal is controlled so as to transmit the identification information to the communication partner terminal, the user terminal may be controlled so as not to transmit the identification information to the communication partner terminal, thereby avoiding the display of the own terminal image in the communication partner terminal. This allows the user to select whether or not to share the own terminal image with the communication partner terminal depending on the circumstances or preference of the user, whereby the convenience can be improved. When P2P communication is started, the user terminal may be set in, as a default state, a state of allowing the display of the own terminal image in the communication partner terminal or a state of not allowing the display of the own terminal image in the communication partner terminal. Alternatively, the present disclosure may be configured such that whether or not to allow the display of the own terminal image in the communication partner terminal after the start of P2P communication can be set before the start of the P2P communication (e.g., as initial settings).
   The sharing icon may be displayed only on a screen not displaying the web page (e.g., a screen in the video call mode), and may be hidden on a screen in the own terminal mode or the communication partner terminal mode, which displays the web page. This prevents the sharing icon from obstructing the web page displayed on a screen in the own terminal mode or the communication partner terminal mode. The display of the sharing icon is not limited thereto, and of the above screens displaying the web page, the sharing icon may be displayed on the screen in the own terminal mode. This can improve the convenience in the case where a screen in the own terminal mode displays (or is displaying) an image that the user does not want the communication partner to see in terms of security or any other reasons.
(3) The above embodiments and modifications each illustrate an example where the identification information transmitted and received by the user terminal 100 is information for identifying the coordinate position of a predetermined position in an image displayed in the middle screen region 108b in accordance with a scroll operation performed when in the own terminal mode, with a specific position on the web page being the base point, i.e., region information for identifying a region to be displayed in accordance with the scroll operation. It should be noted, however, that the identification information transmitted and received by the user terminal 100 is not limited thereto as long as it enables the communication partner terminal to identify the image displayed in the middle screen region 108b in accordance with a scroll operation performed when in the own terminal mode. The identification information transmitted and received by the user terminal 100 may be, for example, operation mode information that enables identification of the operation mode (operation details) of a scroll operation on the middle screen region 108b when in the own terminal mode, examples of which include the modes of a swipe operation (the direction, the amount of scrolling, etc.), a touch operation, pinch-out and pinch-in operations, and an operation on a scroll bar, or may be image information that enables the display of the image displayed in the middle screen region 108b when in the own terminal mode itself. In any case, in Step S15 in FIG. 8, the region (image) corresponding to the identification information is identified as occasion arises, and when in the communication partner terminal mode, the image of the region that has been identified in Step S29 in FIG. 9 and is displayed in the communication partner terminal is displayed, thereby allowing the user to know the screen displayed in the communication partner terminal.
(4) The above embodiments and modifications each illustrate an example where the program for executing the processes illustrated in FIGs. 7 to 12 to display the screens exemplified in FIGs. 4 to 6 and 13 are included in the web page acquired by accessing the web server 200. It should be noted that the present disclosure is not limited thereto, and the program may be downloaded from a predetermined server and installed beforehand. In this case, the program may be configured such that user terminals having the program installed therein can share images in the respective user terminals with each other.
(5) In the above embodiments and modifications, a web page obtained by accessing the web server 200 is shown as an example of a given image to be shared between the user terminals. It should be noted that the given image is not limited thereto, and may be an image (e.g., a web page, a reference material, a photograph, a document, a sales promotion material, an instruction manual, a promotion material for rooms for rent) stored or made displayable in at least one user terminal. In this case, of the user terminals participating in P2P communication, the user terminal storing the image may transmit, to the other user terminal, image data for enabling the display of the image. The given image may include a plurality of types of images (e.g., a photograph and a sales promotion material), or may include images in a plurality of hierarchical levels. The image including images in a plurality of hierarchical levels may be such that, for example, selecting (clicking, touching, or the like) a first link in an image in the first hierarchical level enables the display of an image in the second hierarchical level, selecting a second link in the image in the first hierarchical level enables the display of an image in the third hierarchical level, and likewise, selecting links in the second and third hierarchical levels enable the display of images in the hierarchical levels corresponding to the links. The given image may be an image displayed on the display section by starting up an application installed in the user terminal (e.g., an image provided by the application) or an image displayed on the display section by opening file data of an electronic document (e.g., a photograph and a sales promotion material).
(6) The above embodiments and modifications each illustrate an example where images are shared between two user terminals. It should be noted, however, that the number of user terminals participating in image sharing is not limited thereto and may be three or more. For example, when three users participate in image sharing, the plurality of types of images to be switched include, for example, an own terminal image, an image displayed on a first communication partner terminal owned by a first other user (hereinafter referred to as "first communication partner terminal image"), an image displayed on a second communication partner terminal owned by a second other user (hereinafter referred to as "second communication partner terminal image"), and one or more other images such as a video call image, and the first communication partner terminal image and the second communication partner terminal image may be arranged in this order from the left, the other image(s) may be arranged subsequent thereto, and the own terminal image may be arranged at the rightmost position (that is, the other image(s) may be interposed between the communication partner terminal images and the own terminal image). With this configuration, in accordance with a swipe operation from the left to the right for displaying the leftmost image, the first communication partner terminal image can be displayed, and every time a swipe operation from the right to the left is performed in this state, the displayed image is switched in the following order: the second communication partner terminal image → the other image(s) → the own terminal image. Thus, the user can display a desired image at his/her will. In this case, as in the above embodiments and modifications, even if a swipe operation from the left to the right is further performed when the first communication partner terminal image at the leftmost position is displayed, switching to the own terminal image does not take place, and even if a swipe operation from the right to the left is further performed when the own terminal image arranged at the rightmost position is displayed, switching to the first communication partner terminal image does not take place (It should be noted that this description does not exclude switching to a menu screen, a settings screen, or the like by a further swipe operation from the right to the left when the own terminal image arranged at the rightmost position is displayed.). This configuration makes it easier to understand the position at which the own terminal image is arranged and thus can prevent a switching operation for switching to the own terminal image from becoming difficult to understand. The arrangement is not limited thereto as long as the own terminal image is arranged at either end, and may be such that, for example, the second communication partner terminal image and the first communication partner terminal image are arranged in this order from the right, the other image(s) is arranged subsequent thereto, and the own terminal image is arranged at the leftmost position. Also in this case, as in the above embodiments and modifications, even if a swipe operation from the left to the right is further performed when the own terminal image at the leftmost position is displayed, switching to the second communication partner terminal image does not take place (it should be noted that this description does not exclude switching to a menu screen, a settings screen, or the like by a further swipe operation from the left to the right when the own terminal image arranged at the leftmost position is displayed), and even if a swipe operation from the right to the left is further performed when the second communication partner terminal image at the rightmost position is displayed, switching to the own terminal image does not take place. This configuration makes it easier to understand the position at which the own terminal image is arranged and thus can prevent a switching operation for switching to the own terminal image from becoming difficult to understand. Also, the notification images may be arranged in the order of, from the left, a first communication partner terminal notification image, a second communication partner terminal notification image, a notification image(s) corresponding to the other image(s), and an own terminal notification image, thereby allowing the order in which the notification images are arranged to correspond to the order in which the images are arranged. Although an example where a plurality of user terminals are connected to each other via the P2P communication has been described, the communication format is not limited thereto. For example, the user terminals may be connected to each other via a predetermined server, via a wireless LAN or wired LAN, or using wireless communication technology that enables short-range data communication.

In the second embodiment and the above modifications, one user terminal (the user terminal X) is exemplified as a user terminal on the side offering an explanation, presentation, etc. and one user terminal (the user terminal Y) is exemplified as a user terminal on the side receiving the explanation, presentation, etc. It should be noted that the number of user terminals that can participate in the communication is not limited thereto. For example, two or more user terminals may be the user terminals on the side offering an explanation, presentation, etc. In this case, an image displayed in any one of the two or more user terminals may be shared with the user terminal on the side receiving the explanation, presentation, etc.; images displayed in each of a predetermined number of user terminals may be shared with the user terminal on the side receiving the explanation, presentation, etc.; or images displayed in each of the two or more of user terminals may be shared with the user terminal on the side receiving the explanation, presentation, etc. In the case where an image displayed in only one user terminal is to be shared or an image of each of a predetermined number of user terminals is to be shared, the user terminal(s) offering the image to be shared may be, for example, specified or changed by a predetermined operation performed in the user terminal(s) on the side offering an explanation, presentation, etc. at the time of starting P2P communication or at any timing during the P2P communication. Further, whether an image displayed in only one user terminal is to be shared, an image displayed in each of a predetermined number of user terminals is to be shared, or an image displayed in each of the two or more of user terminals is to be shared may be, for example, specified or changed by a predetermined operation performed in the user terminal(s) on the side offering an explanation, presentation, etc. at the time of starting P2P communication or at any timing during the P2P communication. Also, two or more user terminals may be the user terminals on the side receiving the explanation, presentation, etc.

(7) In the above embodiments and modifications, a swipe operation along the left-right direction on the touch screen 108 is exemplified as a switching operation. It should be noted that the present disclosure may be configured such that a swipe operation along the left-right direction in the middle screen region 108b of the touch screen 108 may be accepted as a valid switching operation.

Also, as the switching operation, a swipe operation on a partial region in the middle screen region 108b (e.g., a region in which a superimposed display of an image on the given image (web page) is possible, such as a region that extends so as to include the notification images in the vertical (perpendicular) direction and also extends from the left end to the right end) may be accepted as a valid switching operation. Alternatively, as the switching operation, a swipe operation on a specific region other than the middle screen region 108b (e.g., the upper screen region 108a or the lower screen region 108c) may be accepted as a valid switching operation. In this case, a region that accepts a scroll operation for displaying any part of the web page in the middle screen region 108b and a region that accepts a switching operation can be separated from each other, whereby the operability can be improved.

Also, the switching operation is not limited to a swipe operation, and may be, for example, a touch operation on the communication partner terminal notification image 402, the video call notification image 403, and the own terminal notification image 404, and in this case, the display mode may be switched to a display mode corresponding to the notification image on which the touch operation was performed. The switching operation may be an operation with respect to the operation detection section 109 equipped in the user terminal, or alternatively, the user terminal may include a sensor (e.g., an acceleration sensor or an angular velocity sensor) for identifying an action applied to the user terminal itself and the switching operation may be an operation of shaking the user terminal itself to the left or to the right. Further, the switching operation may be an operation of displaying a scroll bar or the like for specifying a part to be displayed on the display section and then moving the scroll bar to switch the displayed image to an image corresponding to the position of the scroll bar.

(8) The above embodiments and modifications each illustrate an example where, in Step S05, the entire web page as the given image is drawn in the third region of the RAM 102 in order to display the communication partner terminal image. However, since the same image (e.g., an image in the same web page) is to be shared, the present disclosure may be configured such that the process of Step S05 is not executed and, for example, the web page drawn in the first region in Step S02 may also be used in the identification of the communication partner terminal image so as to enable, of the web page drawn in the first region, the display of the image of the region corresponding to the identification information received from the communication partner terminal in the middle screen region 108b. Although the above embodiments and modifications each illustrate an example where an image displayed in the user's own terminal and an image displayed in the other terminal are images included in the same given image, they are not limited thereto and may be derived from different images. For example, the image displayed in the user terminal X may be an image in a given web page, whereas the image displayed in the user terminal Y may be an image in a predetermined reference material. Further, the image displayed in the user terminal X may include an image in a given web page and a sales promotion material (e.g., an example of images displayed when opening electronic document file data), whereas the image displayed in the user terminal Y may include, in addition to the image in the given web page and the sales promotion material, an image in a given document. Still further, the image displayed in the user terminal X may be an image in a web page at a predetermined URL, whereas the image displayed in the user terminal Y may be an image in a web page at a specific URL that is different from the given URL. Still further, the image displayed in the user terminal X may be an image displayed by starting up an application A in the user terminal X, whereas the image displayed in the user terminal Y may be an image displayed by starting up an application B in the user terminal Y Still further, the image displayed in the user terminal X may include a plurality of types of images, such as an image in a web page at a given URL and an image displayed by starting up an application A in the user terminal X, whereas the image displayed in the user terminal Y may include a plurality of types of images, such as an image in a web page at a specific URL that is different from the given URL and an image displayed by starting up an application B in the user terminal Y This increases the variations of images that can be shared, and thus can improve the convenience.

(9) The above embodiments and modifications each illustrate an example where a plurality of icons are displayed in the lower screen region 108c of the touch screen 108. However, the present disclosure is not limited thereto, and may be configured such that these icons are not displayed and a given image such as a web page are displayed also in the lower screen region 108c. This enlarges the screen region for displaying a given image and thus can improve the visibility. In this case, the icons in the lower screen region 108c may be displayed by, for example, a touch operation on the icon 401.

(10) The above embodiments and modifications each illustrate an example where switching between the plurality of types of images including an own terminal image and a communication partner terminal image takes place along the left-right direction (horizontal direction) and the switching operation is defined as an operation along the left-right direction (horizontal direction). However, the present disclosure is not limited thereto, and the switching may take place along the upper-lower direction (vertical direction), and in this case, the switching operation may be defined as an operation along the upper-lower direction (vertical direction).

(11) In the above embodiments and modifications, a portable device such as a smartphone is described as a typical example of the information processing device. Also in the case where the information processing device is, for example, a stationary personal computer, from a plurality of types of images including an own terminal image and a communication partner terminal image, the image corresponding to a switching operation is displayed on a display device connected to the personal computer. In this case, in addition to this, the present disclosure may be configured such that it is possible to set whether or not to display a composite image including an own terminal image and a communication partner terminal image on a single screen, and depending on the setting, an image selected by a switching operation may be displayed or a composite image may be displayed on a single screen.

Specifically, as control patterns for controlling the display section of the information processing device, a plurality of types of control patterns including the following may be set: a first control pattern that causes an image corresponding to a switching operation to be displayed from among a plurality of types of images including an own terminal image and a communication partner terminal image; and a second control pattern that causes a composite image including an own terminal image and a communication partner terminal image to be displayed on a single screen. Then, any of the plurality of types of control patterns may be set, and the display section of the information processing device may be controlled based on the thus-set control pattern. With this configuration, since the control pattern for controlling the display section of the information processing device is set from the plurality of types of control patterns, the convenience can be improved.

The process for setting the control pattern may be such that, for example, the display size (e.g., the resolution, the number of pixels, and the number of inches) of the display section of the information processing device is determined, and based on the thus-determined display size, the first control pattern is automatically set when the display size is smaller than a predetermined size and the second control pattern is automatically set when the display size is equal to or larger than the predetermined size. With this configuration, the control pattern can be automatically customized according to the display size of a display section of an information processing device to be used.

Alternatively, the process for setting the control pattern may be such that, for example, a control pattern selected by the user is set in accordance with an input operation (operation on an icon used for setting) performed by the user. This enables customization of the control pattern at the will and according to the preference of the user. Furthermore, the control pattern setting may be such that, at an initial stage (at the start of sharing and P2P communication), a control pattern corresponding to the display size is automatically set, and thereafter, the control pattern can be changed and set in accordance with an input operation performed by the user. This can improve the convenience.

(12) The above embodiments and modifications each illustrate an example where the audio data inputted to the microphone 106 of the user's own terminal is transmitted to the other terminal and the audio based on the audio data from the other terminal is outputted from the speaker 107. However, the present disclosure may be configured such that, when the output of audio data is not permitted on the other terminal side, the process for causing the other terminal to output the audio inputted to the microphone 106 of the user's own terminal is not executed (e.g., even if the audio is inputted to the microphone 106 of the user's own terminal, the audio data is not transmitted to the other terminal), and when the output of audio data is permitted on the other terminal side, the process for causing the other terminal to output the audio inputted to the microphone 106 of the user's own terminal is executed (e.g., the audio data inputted to the microphone 106 of the user's own terminal is transmitted to the other terminal and the audio data is outputted from the other terminal). In an illustrative example, in the user terminal X on the side offering an explanation etc. and the user terminal Y on the side receiving the explanation etc. in the second embodiment, whether or not to permit the output of audio data from the other terminal can be set in the user terminal X, and when the output of the audio data is not permitted, even if audio is inputted to the microphone 106 of the user terminal Y, the audio data is not transmitted to the user terminal X, and when the output of audio data is permitted on the user terminal X side, the audio data inputted to the microphone 106 of the user terminal Y may be transmitted to the user terminal X and the audio data may be outputted from the user terminal X. On the other hand, since the user terminal Y is on the side receiving the explanation etc., whether or not to permit the output of audio data from the user terminal X cannot be set on the user terminal Y side. With this configuration, audio from the user X can be reliably outputted on the user terminal Y side, whereas, on the user terminal X side, it is possible to block audio from the user Y by not permitting the output of the audio if the output of the audio from the user Y is not desirable (e.g., if the explanation may be disturbed). This allows the user X to focus on the explanation, etc. and thus can improve the convenience.

In particular, in the case where an image displayed in the user terminal X is to be shared with two or more user terminals, i.e., an image displayed in the user terminal X on the side offering the explanation etc. is to be shared between a plurality of user terminals (user terminals on the side receiving the explanation etc.) during the explanation etc., and where audio from the user terminal X can be outputted from each of the plurality of user terminals and audio from any of the plurality of user terminals can be outputted from the user terminal X and also from each of the other user terminals, there is a risk that the audio from any of the plurality of user terminals may overlap and disturb the explanation being offered by the user X and that the audio from each of the plurality of users may be mixed up to cause confusion. That is, in the case where the information that enables identification of an image that can be displayed on display sections of other information processing devices is information that can be received by the plurality of information processing devices and audio information received from the other information processing devices includes audio identified based on audio information outputted in a second step in the plurality of information processing devices, the above-described various inconveniences may be caused by audio from the plurality of information processing devices. However, by allowing whether or not to permit the output of audio from each of the plurality of user terminals (the user terminals on the side receiving the explanation etc.) to be set on the user terminal X side, audio from each user can be outputted from each user terminal only with the permission of the user X and cannot be outputted without the permission of the user X, whereby the convenience can be improved. Regarding the setting of whether or not to permit the output of audio, the user terminal X may set, for all the plurality of user terminals, whether or not to equally permit the output of audio from all the users, or instead of or in addition to this, the user terminal X may set whether or not to permit the output of audio for each one of the plurality of user terminals (for each one of the users). This can further improve the convenience.

(13) The second embodiment and the above modifications each illustrate, as an example where a process for enabling another information processing device (e.g., the user terminal X) to identify a first image (e.g., an image displayed on the user terminal Y side) is not executed, the case where a process of outputting identification information for identifying a region (image) in accordance with a scroll operation performed in the user terminal Y is not executed, as illustrated with reference to FIG. 11. However, the present disclosure is not limited thereto and may be configured such that, although the identification information is outputted from the user terminal Y, the identification information is not received or a display process using the identification information is not executed on the user terminal X side.

(14) In the second embodiment and the above modifications, the relationship between the user terminals X and Y is such that, as described above with reference to FIG. 13, the user terminal X is the user terminal on the side offering an explanation, presentation, etc. and the user terminal Y, which can switch the display mode to the communication partner terminal mode but does not output the identification information for identifying the own terminal image, is the user terminal on the side receiving the explanation, presentation, etc. However, the relationship between the user terminals X and Y is not limited thereto, and the user terminal X may be the user terminal on the side receiving the explanation, presentation, etc. and the user terminal Y, which can switch the display mode to the communication partner terminal mode but does not output the identification information for identifying the own terminal image, may be the user terminal on the side offering an explanation, presentation, etc.

(15) In the second embodiment and the above modifications, as illustrated in Step S04a in FIG. 10, Step S13a in FIG. 11, Step S24a in FIG. 12, etc., it is determined whether the user terminal executing the process is the user terminal on the room creation side. However, for example, as long as whether the user terminal is on the host side of the communication can be determined, whether the user terminal is, for example, the user terminal that has transmitted the sharing link may be determined. Further, although whether the user terminal is on the host side of the communication is determined in Step S04a in FIG. 10, Step S13a in FIG. 11, and Step S24a in FIG. 12, the present disclosure is not limited thereto, and whether the user terminal is a specific user terminal may be determined. The specific user terminal may be, for example, a user terminal that is not on the host side of the communication (the user terminal Y in FIG. 13), and regardless of whether or not the user terminal is on the host side of the communication, the specific user terminal may be, for example, specified or changed from among the user terminals participating in the communication at the time of starting P2P communication or at any timing during the P2P communication, by performing a predetermined setting operation in all the user terminals participating in the communication or in a specific user terminal (e.g., the user terminal on the host side of the communication) among all the user terminals participating in the communication.

(16) In the above embodiments and modifications, the example illustrated in the first embodiment and the example illustrated in the second embodiment are described as different technical matters. However, the present disclosure is not limited thereto, and for example, may be embodied as a program, method, and information processing device that enable execution of both the processes described in the first embodiment (the processes illustrated in FIGs. 1 to 9, including the processes for enabling sharing of images displayed on both the user terminals; referred to as "first processes" hereinafter) and the processes described in the second embodiment (the processes illustrated in FIG.s 10 to 13, including the processes for sharing an image displayed on only one user terminal; referred to as "second processes" hereinafter) and are configured such that which of the first processes and the second processes are to be executed can be selected and set by an input operation performed in the user terminal. More specifically, they may be configured such that, at the time of starting P2P communication, which of the first processes and the second processes are executed during the communication to be started from now can be selected, for example, in accordance with an input operation performed in the user terminal on the host side of the communication, or alternatively, may be configured such that which of the first processes and the second processes are executed in accordance with an input operation in the user terminal can be selected in advance according to the initial settings or the like and the selected processes are executed. Thus, in the communication partner terminal (e.g., a user terminal that is not on the host side of the communication), the processes selected in the user terminal on the host side of the communication are executed upon the start of communication without the need for any operation. Even after the start of the P2P communication, it is possible to switch the processes to be executed from the first processes to the second processes or from the second processes to the first processes at any timing during the communication in accordance with an input operation in all the user terminals participating in the communication or in a specific user terminal (e.g., the user terminal on the host side of the communication) among all the user terminals participating in the communication. Thus, in a communication partner terminal (e.g., a user terminal that is not on the host side of the communication), the processes selected in the user terminal on the host side of the communication are executed without the need for any operation even during the communication. This can further improve the convenience.

(17) The above embodiments and modifications each illustrate an example where the communication partner terminal notification image 402, the video call notification image 403, and the own terminal notification image 404 are displayed to notify the display mode of the middle screen region 108b. However, instead of or in addition to this, identification images that enable identification of the display mode of the screen displayed in the middle screen region 108b from among the plurality of types of display modes may be displayed in order to allow the user to know the currently set display mode. That is, from among the plurality of types of identification images, an identification image corresponding to the display mode currently set by the switching operation may be displayed. The identification image that enables identification of the communication partner terminal mode may be, for example, any of the user name of the communication partner terminal (the user X's screen or the like), the role name of the communication partner terminal (the explainer's screen, the host's screen, or the like), and an icon, mark, or the like corresponding to the communication partner terminal. The identification image that enables identification of the video call mode may be, for example, any of the user name of the communication partner terminal (the state of the user X or the like), the role name of the communication partner terminal (the state of the explainer, the state of the host, or the like), and an icon, mark, or the like corresponding to the state of the communication partner terminal. The identification image that enables identification of the own terminal mode may be, for example, any of the user name of the user's own terminal (the user Y's screen, your screen, or the like), the role name of the user's own terminal (the viewer's screen, the student's screen, or the like), and an icon, mark, or the like corresponding to the user's own terminal. Alternatively, the own terminal mode may be notified without displaying anything as the identification image for the own terminal mode. The identification image may be displayed in, for example, a predetermined region (e.g., a lower right region) in the middle screen region 108b or in a predetermined region other than the middle screen region 108b. Further, the identification image may be displayed constantly, or alternatively, it may be displayed for a predetermined period of time (e.g., 10 seconds) after the switching operation is performed to switch the display mode and then may be hidden after a lapse of the predetermined period of time.

### Reference Signs List

- 1: Communication system
- 2: Network
- 100: User terminal
- 200: web server
- 300: Signaling server

## Claims

1. A program to be executed in an information processing device that includes a processor, a memory, an input section, and a display section,
the program being configured to cause the information processing device to execute the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step, wherein
in the switching step, when the display section displays an image different from the second image, the displayed image can be switched to the second image by performing the second operation with respect to the input section of the information processing device at a timing when the second operation is performed, regardless of the presence or absence of an operation with respect to the input section of the other information processing device.

2. A program to be executed in an information processing device that includes a processor, a memory, an input section, and a display section,
the program being configured to cause the information processing device to execute the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step, wherein
also in the other information processing device, an image displayed can be switched, in accordance with a second operation with respect to the input section of the other information processing device, to any of a plurality of types of images including an image corresponding to the first operation with respect to the input section of the other information processing device and a second image identified based on the information outputted in the output step, and
in the switching step, regardless of which of the images is displayed on the display section of the other information processing device, the displayed image can be switched, in accordance with the second operation with respect to the input section, to any of the plurality of types of images including the first image and the second image.

3. A program to be executed in an information processing device that includes a processor, a memory, an input section, and a display section,
the program being configured to cause the information processing device to execute the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step, wherein
in the output step, the information for enabling the other information processing device to identify the image that can be displayed on the display section of the information processing device in accordance with the first operation with respect to the input section is outputted, regardless of which of the plurality of types of images is displayed on the display section of the information processing device, and
in the receiving step, the information for enabling identification of the image that can be displayed on the display section of the other information processing device is received, regardless of which of the plurality of types of images is displayed on the display section of the information processing device.

4. The program according to any one of claims 1 to 3, wherein
the plurality of types of images include a predetermined third image that is different from both the first image and the second image, and
the program causes the information processing device to execute the step of displaying a predetermined icon image for receiving an operation to permit the first image to be displayed in the other information processing device when the displayed image is switched to the third image, whereas the predetermined icon image is not displayed when the displayed image is switched to the first image and the second image.

5. The program according to any one of claims 1 to 3, wherein
the plurality of types of images include a predetermined third image that is different from both the first image and the second image, and
in the switching step, switching from the first image to the second image and switching from the second image to the first image are regulated, whereas switching between the first image and the third image and switching between the second image and the third image are allowed.

6. The program according to any one of claims 1 to 3, wherein
the program causes the information processing device to execute the step of displaying a plurality of types of corresponding images that correspond to the plurality of types of images, regardless of the type of the image displayed by switching in the switching step, with the corresponding image that corresponds to the image displayed by switching in the switching step being displayed in a different manner from those for the other corresponding images.

7. The program according to any one of claims 1 to 3, wherein
the information outputted in the output step and the information received in the receiving step are each region information for identifying a region of the given image corresponding to the first operation with respect to the input section.

8. The program according to any one of claims 1 to 3, wherein
the input section is a touch panel,
the first operation includes an operation with respect to the touch panel, and
the information outputted in the output step and the information received in the receiving step are each operation mode information for enabling identification of a mode of the operation with respect to the touch panel.

9. The program according to any one of claims 1 to 3, wherein
the information outputted in the output step and the information received in the receiving step are each image information for enabling display of an image of a region of the given image corresponding to the first operation with respect to the input section.

10. The program according to any one of claims 1 to 3, wherein
the program causes the information processing device to execute the steps of:
displaying, on the display section of the information processing device, a composite image including at least the image that is part of the given image corresponding to the operation with respect to the input section of the information processing device and the image identified based on the information received in the receiving step; and
setting a control pattern of the information processing device from a plurality of types of control patterns, wherein
the plurality of types of control patterns include a first control pattern that causes the information processing device to execute the identification step, the receiving step, and the switching step and a second control pattern that causes the information processing device to execute the identification step, the receiving step, and the composite image displaying step.

11. The program according to claim 10, wherein
in the control pattern setting step, according to a display size of the display section of the information processing device, the first control pattern is set when the display size is smaller than a predetermined size and the second control pattern is set when the display size is equal to or larger than the predetermined size.

12. The program according to claim 10, wherein
in the control pattern setting step, any of the plurality of types of control patterns is set in accordance with a third operation with respect to the input section.

13. The program according to any one of claims 1 to 3, wherein
the given image that serves as a display target image to be displayed on the display section of the information processing device may be different from a given image that serves as a display target image to be displayed on the display section of the other information processing device.

14. The program according to any one of claims 1 to 3, wherein
the input section is a touch panel,
the second operation is a moving gesture along a predetermined direction on the touch panel, and
in the switching step, in a state where the first image is displayed on the display section of the information processing device, switching to another image included in the plurality of types of images is not achieved by a moving gesture toward a specific direction along the predetermined direction and can be achieved by a moving gesture toward a direction that is different from the specific direction along the predetermined direction.

15. A method to be executed in an information processing device that includes a processor, a memory, an input section, and a display section, the method comprising the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step, wherein
in the switching step, when the display section displays an image different from the second image, the displayed image can be switched to the second image by performing the second operation with respect to the input section of the information processing device at a timing when the second operation is performed, regardless of the presence or absence of an operation with respect to the input section of the other information processing device.

16. A method to be executed in an information processing device that includes a processor, a memory, an input section, and a display section, the method comprising the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step, wherein
also in the other information processing device, an image displayed can be switched, in accordance with a second operation with respect to the input section of the other information processing device, to any of a plurality of types of images including an image corresponding to the first operation with respect to the input section of the other information processing device and a second image identified based on the information outputted in the output step, and
in the switching step, regardless of which of the images is displayed on the display section of the other information processing device, the displayed image can be switched, in accordance with the second operation with respect to the input section, to any of the plurality of types of images including the first image and the second image.

17. A method to be executed in an information processing device that includes a processor, a memory, an input section, and a display section, the method comprising the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step, wherein
in the output step, the information for enabling the other information processing device to identify the image that can be displayed on the display section of the information processing device in accordance with the first operation with respect to the input section is outputted, regardless of which of the plurality of types of images is displayed on the display section of the information processing device, and
in the receiving step, the information for enabling identification of the image that can be displayed on the display section of the other information processing device is received, regardless of which of the plurality of types of images is displayed on the display section of the information processing device.

18. An information processing device comprising:
a processor;
a memory;
an input section; and
a display section, wherein
the information processing device includes the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step, and
in the switching step, when the display section displays an image different from the second image, the displayed image can be switched to the second image by performing the second operation with respect to the input section of the information processing device at a timing when the second operation is performed, regardless of the presence or absence of an operation with respect to the input section of the other information processing device.

19. An information processing device comprising:
a processor;
a memory;
an input section; and
a display section, wherein
the information processing device includes the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step,
also in the other information processing device, an image displayed can be switched, in accordance with a second operation with respect to the input section of the other information processing device, to any of a plurality of types of images including an image corresponding to the first operation with respect to the input section of the other information processing device and a second image identified based on the information outputted in the output step, and
in the switching step, regardless of which of the images is displayed on the display section of the other information processing device, the displayed image can be switched, in accordance with the second operation with respect to the input section, to any of the plurality of types of images including the first image and the second image.

20. An information processing device comprising:
a processor;
a memory;
an input section; and
a display section, wherein
the information processing device includes the steps of:
outputting information for enabling an other information processing device to identify, from within a given image, an image that can be displayed on the display section in accordance with a first operation with respect to the input section;
receiving information for enabling identification of an image that can be displayed on a display section of the other information processing device in accordance with a first operation with respect to an input section of the other information processing device; and
switching, in accordance with a second operation with respect to the input section, an image displayed on the display section to any of a plurality of types of images including a first image that is part of the given image corresponding to the first operation with respect to the input section of the information processing device and a second image identified based on the information received in the receiving step,
in the output step, the information for enabling the other information processing device to identify the image that can be displayed on the display section of the information processing device in accordance with the first operation with respect to the input section is outputted, regardless of which of the plurality of types of images is displayed on the display section of the information processing device, and
in the receiving step, the information for enabling identification of the image that can be displayed on the display section of the other information processing device is received, regardless of which of the plurality of types of images is displayed on the display section of the information processing device.
